# EUROPEAN PATENT SPECIFICATION

(11) **EP 3 913 781 B1**
(45) Date of publication and mention of the grant of the patent: **23.04.2025**
(21) Application number: 20175977.6
(22) Date of filing: 22.05.2020
(51) Int. Cl.: H02M 1/32, H02M 7/483, H02H 9/02, H01H 71/14

(54) **MODULAR MULTILEVEL CONVERTERS**
MODULARE MEHRSTUFIGE WANDLER
CONVERTISSEURS MODULAIRES MULTINIVEAUX

(43) Date of publication of application: 24.11.2021
(60) Divisional application: 25154973.9
(73) Proprietor: GE Energy Power Conversion Technology Ltd, Rugby, Warwickshire CV21 1BD (GB)
(72) Inventor: Geske, Martin, 12277 Berlin (DE); Keller, Christian, 12277 Berlin (DE); Lapassat, Nicolas, 91140 Villebon-sur-Yvette (FR); Soua, Samir, 91140 Villebon-sur-Yvette (FR); Crane, Allan, Rugby, Warwickshire CV21 1BU (GB)
(74) Representative: Serjeants LLP

(56) References cited:
- EP-A1- 3 244 429
- CN-A- 105 895 458
- CN-A- 111 026 082
- CN-U- 206 117 539
- CN-U- 209 046 521
- KR-A- 20170 090 911
- US-A1- 2018 062 291
- US-A1- 2018 301 295
- YANG LIXIA ET AL: "A Novel Fault-Tolerant Control Method for Modular Multilevel Converters", 2019 IEEE 4TH INTERNATIONAL FUTURE ENERGY ELECTRONICS CONFERENCE (IFEEC), IEEE, 25 November 2019 (2019-11-25), pages 1 - 6, XP033727994, DOI: 10.1109/IFEEC47410.2019.9015155
- ALHARBI MOHAMMED ET AL: "An Optimized SM Fault-Tolerant Control Method For MMC-based HVDC Applications", 2019 IEEE ENERGY CONVERSION CONGRESS AND EXPOSITION (ECCE), IEEE, 29 September 2019 (2019-09-29), pages 1592 - 1597, XP033666303, DOI: 10.1109/ECCE.2019.8912483
- KIM DO-HYUN ET AL: "Operational improvement of Modular Multilevel Converter with redundancy sub-modules by new NLC Scheme", 2015 IEEE POWER & ENERGY SOCIETY GENERAL MEETING, IEEE, 26 July 2015 (2015-07-26), pages 1 - 5, XP033224778, DOI: 10.1109/PESGM.2015.7286051
- LI BINBIN ET AL: "Seamless Transition Control for Modular Multilevel Converters When Inserting a Cold-Reserve Redundant Submodule", IEEE TRANSACTIONS ON POWER ELECTRONICS, INSTITUTE OF ELECTRICAL AND ELECTRONICS ENGINEERS, USA, vol. 30, no. 8, 1 August 2015 (2015-08-01), pages 4052 - 4057, XP011574679, ISSN: 0885-8993, [retrieved on 20150305], DOI: 10.1109/TPEL.2015.2392778
- XING ZHONGWEI ET AL: "Soft-Switching Operation of Isolated Modular DC/DC Converters for Application in HVDC Grids", IEEE TRANSACTIONS ON POWER ELECTRONICS, INSTITUTE OF ELECTRICAL AND ELECTRONICS ENGINEERS, USA, vol. 31, no. 4, 1 April 2016 (2016-04-01), pages 2753 - 2766, XP011592277, ISSN: 0885-8993, [retrieved on 20151126], DOI: 10.1109/TPEL.2015.2448125
- WANG HONG ET AL: "Research on the Soft-Switching Characteristics of Modular DC Solid State Transformer for DC Power Distribution Applications", 2019 IEEE POWER AND ENERGY CONFERENCE AT ILLINOIS (PECI), IEEE, 28 February 2019 (2019-02-28), pages 1 - 6, XP033541993, DOI: 10.1109/PECI.2019.8698925

## Description

### DESCRIPTION

### Technical Field

The present invention relates to modular multilevel converters (MMCs) and to methods of operating and testing MMCs.

### Background Art

MMCs are well known for various medium- and high-power applications and have been implemented as:
- voltage source converters (VSCs), e.g., for high voltage direct current (HVDC) transmission systems,
- variable speed drives (VSDs), e.g., for driving electrical machine and other electrical loads,
- AC/AC converters, e.g., for supplying AC power to the overhead line of electric rail networks or industrial equipment, and
- static synchronous compensators (STATCOMs) for regulating AC transmission networks, for example.

A typical MMC includes at least one converter arm with a plurality of series-connected submodules (sometimes called switching modules). The submodules can have any suitable topology such as half-bridge, full-bridge, cross-connected, mixed-cell etc. as will be known to the skilled person. Each submodule normally has at least two controllable semiconductor switches and an energy storage device (e.g., a capacitor). In some arrangements, the semiconductor switches are connected in series and the energy storage device is connected in parallel with the series-connected semiconductor switches. According to the switching state of each submodule - as determined by the switching state of the individual semiconductor switches - the converter arm current will either charge/discharge the energy storage device or bypass the energy storage device so that its voltage is maintained. The MMC will typically have a plurality of converter arms arranged in parallel - for example each converter arm may be connected in parallel between a pair of DC buses with each converter phase having an upper arm with one or more submodules and a lower arm with one or more submodules and defining an AC bus therebetween, or each converter arm may be connected at one end to a respective AC bus and connected to each other (e.g., in a star or delta configuration) or to another respective AC bus at the other end.

To ensure reliability, the MMC should continue to operate even if some of the submodules fail. Each submodule can include a bypass switch connected between its AC terminals. During normal operation, the bypass switches are open so that converter arm current is flowing through the submodules. But in the event of a fault in one of the submodules, the faulty submodule can be deactivated and taken out of the converter arm. To do this, the bypass switch for the faulty submodule can be closed to create a direct electrical path between the AC terminals so that the converter arm current is diverted past the semiconductor switches and the energy storage device. The faulty submodule can then be repaired or physically removed and replaced with a new submodule. Each converter arm can also include at least one redundant submodule. The redundant submodule can be a "cold" redundant submodule, meaning that it is normally bypassed and does not take any active part during normal operation of the MMC. The redundant submodule is only activated if a fault is detected, when it will take the place of the faulty submodule so that the MMC remains operational.

Li Binbin et al: "Seamless Transition Control for Modular Multilevel Converters When Inserting a Cold-Reserve Redundant Submodule", IEEE Transactions on Power Electronics, Institute of Electrical and Electronics Engineers, USA, vol. 30, no. 8, 1 August 2015, pages 4052-4057, describes an MMC with "cold" redundant submodules where the inserting switch is a vacuum bypass contactor.

US 2018/301295 A1 describes a mechatronic circuit breaker device with a main branch comprising a semiconductor switch (e.g., an IGBT) and a pair of vacuum interrupters electrically connected in series. In parallel with the main branch, an auxiliary branch is provided. The auxiliary branch includes a semiconductor switch (e.g., a thyristor) and a capacitor connected in series. In response to a detected fault current, the semiconductor switch in the main branch is opened to divert current into a parallel snubber circuit. The semiconductor switch in the auxiliary branch is closed to divert current from the main branch to the auxiliary branch. When the current is well established in the auxiliary branch, the magnitude of the current flowing in the main branch is substantially zero and the vacuum interrupters are opened without significant electrical erosion because of the virtual absence of electrical arcing. Current is eventually diverted into a separate parallel path of the circuit breaker.

### Summary of the invention

The present invention provides a converter arm for a modular multilevel converter (MMC) according to claim 1.

As used herein, an "active" submodule is a submodule that undergoes switching during normal operation of the MMC. A "redundant" submodule is a submodule that is provided for redundancy and does not undergo switching during normal operation of the MMC. If a redundant submodule is inserted into the converter arm in response to a detected fault in an active submodule or to temporarily provide an increased output voltage or power, as described in more detail below, the inserted redundant submodule will become an active submodule and will subsequently undergo switching during operation of the MMC.

If the inserting switch is connected between the first and second AC terminals of the same redundant submodule (i.e., the first redundant submodule), activating the inserting switch will insert that redundant submodule into the converter arm. However, it will be readily understood that in some arrangements the inserting switch can be used to insert two or more redundant submodules into the converter arm. For example, if the inserting switch is connected between the first AC terminal of the first redundant submodule and the second AC terminal of a second redundant submodule, activating the inserting switch will insert the first and second redundant submodules (and any additional redundant submodules that are connected in series between the first and second submodules) into the converter arm. Where the description below refers to the insertion of only one redundant submodule into the converter arm when the inserting switch is activated, it will be understood that this is not intended to exclude inserting two or more redundant submodules where the inserting switch is appropriately connected. Two or more redundant submodules can also be independently inserted into the converter arm by activating their respective inserting switch, i.e., where the converter arm includes two or more inserting switches, each inserting switch being connected to insert at least one redundant submodule into the converter arm when it is activated. Each inserting switch can be as described in more detail below.

The circuit breaker must provide rapid interruption of the converter arm current in the electrical path between the respective first and second AC terminals when there is a need to insert the "cold" redundant submodule(s) into the converter arm in response to a fault in an active submodule that is undergoing switching during normal operation of the MMC. It is generally preferred that the circuit breaker will be capable of interrupting the converter arm current within about 10 to 100 ms of being activated so as to insert the redundant submodule(s) into the converter arm as rapidly as possible. In practice, the interruption of the converter arm current means that the converter arm current is forced to flow through the inserted redundant submodule(s) to charge the energy storage device(s) until there is sufficient DC voltage for switching operation to start so that the redundant submodule(s) is (are) fully inserted into the converter arm.

In one arrangement, the fast-acting circuit breaker is a mechanical or electro-mechanical circuit breaker. The fast-acting mechanical circuit breaker is implemented using a spring-tightened opening switch where activation releases the tightened spring to rapidly open the switch and directly interrupt the converter arm current.

In one arrangement, the fast-acting circuit breaker includes a fast-acting mechanical or electro-mechanical switch adapted to be opened in response to a detected fault in an active submodule and a fuse connected in parallel with the fast-acting mechanical or electro-mechanical switch. In this arrangement, the fast-acting mechanical or electro-mechanical switch will not interrupt the converter arm current, but will divert the converter arm current into the fuse when it is opened. The contactor is connected in series with the parallel-connected fuse and fast-acting mechanical or electro-mechanical switch.

Any suitable fuse can be used - including conventional fuse types. The activation time of the fuse will typically depend on the magnitude of the converter arm current. Depending on the design of the fast-acting mechanical or electro-mechanical switch, the fuse resistance can be about 5 to 10 times the resistance of the mechanical or electro-mechanical switch in order to achieve an appropriate current level to activate the fuse when the mechanical or electro-mechanical switch is opened.

The fast-acting mechanical or electro-mechanical switch can be a pyrotechnic switch that typically includes an electrically-activated pyrotechnic charge. The pyrotechnic charge may be used to force apart electrical contacts that are carrying the converter arm current or to force an electrically insulating blade to physically sever or break an electrical conductor that is carrying the converter arm current. Such pyrotechnic switches are typically capable of opening within about 0.35 ms of being activated. As technological background, the skilled person can refer to United States Patent Application Nos. 2008/0137253 and 2018/0277325, which disclose circuit protection devices comprising a pyrotechnic switch connected in parallel with a fuse. The pyrotechnic switch is activated in response to a detected fault current such as an overload current or a short-circuit current, for example. The fast-acting mechanical or electro-mechanical switch can also be implemented using a spring-tightened opening switch where activation releases the tightened spring to rapidly open the switch and divert the converter arm current into the fuse.

The fast-acting circuit breaker can be externally activated, e.g., by an activation signal generated by a fault detection device. This includes external activation of the pyrotechnic switch or other fast-acting mechanical or electro-mechanical switch mentioned above. The fast-acting circuit breaker can receive power from any suitable power source for its activation. For example, the fast-acting circuit breaker can receive activation power from one or more of:
- an external power source, optionally by means of an insulating transformer,
- the fault detection device, e.g., where cabling that provides the activation signal also provides power for activating the fast-acting circuit breaker,
- a controller that can be implemented at the converter, converter arm or submodule level,
- a redundant submodule, and
- one or more active submodules.

Supplying the fast-acting circuit breaker with power from two or more power sources provides redundancy.

Each submodule can include an auxiliary power supply which can supply power to the fast-acting circuit breaker. Where possible, the cabling and insulation requirements of the converter arm should be minimised by connecting the fast-acting circuit breaker to the auxiliary power supply of one or more physically close or adjacent submodules.

The inserting switch further comprises an electrically-controlled contactor connected in series with the fast-acting circuit breaker. Any suitable contactor can be used as part of the inserting switch - including conventional contactor types such as electrical and electro-mechanical switches. The combined voltage rating of the series-connected contactor and the fast-acting circuit breaker (or its relevant sub-component) must be equal to, or greater than, the maximum output voltage of the redundant submodule(s) after being inserted into the converter arm and actively switching. It is important to note that the contactor is not typically intended to be used to interrupt the converter arm current during normal operation of the MMC but this is possible in some arrangements. Output voltage can be increased by temporarily opening the contactor to insert the redundant submodule(s) into the converter arm and operating each inserted redundant submodule as an active submodule according to a switching operation, for example, during an overvoltage operation of the MMC. Output power can also be increased by temporarily inserting the redundant submodule(s) into the converter arm to provide higher voltage at the same current level, and where an interface transformer can adapt the line-to-line voltage or transfer ratio through an on-load tap changer at the converter terminals, for example. In this arrangement, the ability of the contactor to be opened and closed several times is used to selectively insert one or more redundant submodules into the converter arm and to remove the one or more redundant submodules from the converter arm. The contactor can be controlled to open and close by a controller and is adapted to be opened in response to a detected fault in an active submodule or as required. The controller can be coordinated with the fault detection device to open the contactor after the fast-acting circuit breaker has been opened in response to a detected fault in an active submodule to increase the voltage rating of the inserting switch. The fast-acting circuit breaker can have a lower voltage rating than the inserting switch as a whole. The contactor can receive power from any suitable power source for its activation, including from the power sources for the fast-acting circuit breaker described above.

When the MMC is operating normally, each inserting switch is closed so that the respective redundant submodule(s) is (are) bypassed and the converter arm current flows between the first and second AC terminals through the inserting switch. In particular, it will be readily understood that both the fast-acting circuit breaker and the contactor are closed - i.e., in a closed position. If a fault is detected in one of the active submodules, the faulty active submodule may be bypassed - e.g., by closing a bypass switch connected between the AC terminals of the faulty active submodule in a known manner - and at least one redundant submodule is inserted into the converter arm to take its place.

The at least one redundant submodule is inserted into the converter arm by activating the fast-acting circuit breaker to rapidly interrupt the converter arm current in the electrical path between the first and second AC terminals - e.g., by sending an activation signal generated by a fault detection device to activate the circuit breaker. In the arrangement where the inserting switch includes a fast-acting mechanical or electro-mechanical switch and a fuse connected in parallel, the converter arm current will typically flow mainly through the fast-acting mechanical or electro-mechanical switch during normal operation of the MMC. As explained above, opening the fast-acting mechanical or electro-mechanical switch will divert the converter arm current into the parallel-connected fuse which will activate (i.e., rupture or melt) to interrupt the converter arm current and open the electrical path between the first and second AC terminals. Opening the electrical path diverts converter arm current through the redundant submodule(s) so that it is (they are) inserted into the converter arm. In particular, the diverted converter arm current will flow through the energy storage device of each inserted redundant submodule so that the energy storage device(s) will immediately start to charge. In some arrangements, if the converter arm current flows through the inserted redundant submodule(s) along a current path that includes one or more of the controllable semiconductor switches, the redundant submodule(s) must be placed in a suitable switching state - as determined by the switching states of the individual semiconductor switches - for the energy storage device(s) to be charged. The current path can also include one or more of the anti-parallel connected diodes - see below - and in some arrangements the energy storage device(s) can be charged without any need to alter the switching states of the individual semiconductor switches. Each inserted redundant submodule can only start normal switching operation as an active submodule of the converter arm after the DC voltage across the energy storage device reaches a minimum DC voltage threshold (e.g., about 250 to 500 V). The period of time between the fast-acting circuit breaker being activated and the inserted redundant submodule(s) being fully inserted into the converter arm can be referred to as the "inserting period" and the process of inserting the redundant submodule(s) as an "inserting process".

The switching of the individual semiconductor switches so that the MMC provides the desired power conversion or static synchronous compensation, for example, can be controlled by a suitable switching controller. The switching controller can generate gate drive commands for controlling the respective gate drive unit of each semiconductor switch so that the semiconductor switch is turned on or off as required.

After the fast-acting circuit breaker has been activated and the converter arm current has been interrupted, the contactor can be opened to increase the voltage rating of the inserted redundant submodule(s).

The contactor can also be used for testing the redundant submodule(s). It will be understood that the fast-acting circuit breaker can only be opened and cannot be closed - this is the case for circuit breakers that include fuses, pyrotechnic elements or tightened-spring contacts, for example. The series-connected contactor that can be opened and closed several times is therefore particularly useful for testing functions. For example, during a pre-charge sequence of the MMC where the energy storage devices of the active submodules are being charged before normal operation of the MMC is started, the contactor can be opened to divert pre-charge current to the redundant submodule(s) for testing purposes. The value of one or more parameters of each redundant submodule such as the DC voltage or current of the energy storage device (e.g., capacitor) can be measured or calculated and each measured or calculated value can be compared against a respective threshold or expected value to determine if the redundant submodule is operating normally. Each submodule includes a DC voltage measurement unit which can compare a measured DC voltage against a DC voltage threshold. If the measured DC voltage reaches the DC voltage threshold, optionally within a predetermined time limit, the functionality of the redundant submodule can be validated. The measured DC voltage can be compared against an expected DC voltage that can be estimated based on the measured converter arm current and the calculated charge level of the energy storage device using the known capacitance value. The difference between the measured and expected DC voltages can be used to detect a fault or malfunction in the redundant submodule allowing it to be repaired or replaced if necessary. Alternatively, the rate of change of the measured DC voltage can be used for testing in the same way.

Once the testing process is complete, the contactor is closed.

The semiconductor switches can be switched (i.e., turned on and off) during the testing process to put the redundant submodule into different switching states. For example, a switching state where the energy storage device is charged/discharged and a switching state where the energy storage device is bypassed such that its voltage remains unchanged can be used. The value of one or more parameters of each redundant submodule such as the DC voltage or current of the energy storage device can be measured or calculated for each switching state and compared against a respective threshold or expected value to determine if the redundant submodule is operating normally for all switching states.

Each semiconductor device may further include an anti-parallel connected diode, i.e., a diode connected in anti-parallel with its associated controllable semiconductor switch. Controllable semiconductor switches that normally include an anti-parallel connected diode would include insulated-gate bipolar transistors (IGBTs), for example.

The submodules can have any suitable topology such as half-bridge, full-bridge, cross-connected, mixed-cell etc. as will be known to the skilled person. Typically, each submodule will include at least two controllable semiconductor switches connected in series and an energy storage device (e.g., a capacitor) connected in parallel with the series-connected semiconductor switches. In a full-bridge topology, each submodule comprises a first leg with two controllable semiconductor switches connected in series and a second leg with two controllable semiconductor switches connected in series. The first and second legs are connected in parallel. An energy storage device (e.g., a capacitor) is connected in parallel with both the first and second legs. If the submodule includes an auxiliary power supply, it can be connected in parallel with the energy storage device and the first and second arms. A junction of the semiconductor switches in the first leg defines the first AC terminal and a junction of the semiconductor switches in the second leg defines the second AC terminal. At least one of the first and second AC terminals of each submodule is connected to an adjacent submodule to define the converter arm. If the converter arm includes *n* submodules, the first AC terminal of the first submodule in the series (i.e., the submodule at a first end of the converter arm) can be connectable to an AC bus or a DC bus - e.g., forming part of an external power system. The second AC terminal of the nth submodule in the series (i.e., the submodule at a second end of the converter arm) can be connectable to an AC bus or a DC bus - e.g., forming part of an external power system - or to another converter arm of the MMC. For all other submodules (i.e., where *n*=1, 2, ..., (*n*-1)) the second AC terminal is connected to the first AC terminal of the next submodule in the converter arm. That is, the second AC terminal of the first submodule is connected to the first AC terminal of the second submodule, the second AC terminal of the second submodule is connected to the first AC terminal of the third submodule, the second AC terminal of the third submodule is connected to the first AC terminal of the fourth submodule, and so on, until the nth submodule.

The converter arm may comprise a plurality of redundant submodules.

The present invention further provides an MMC comprising a converter arm as described above.

The MMC may comprise a plurality of converter arms.

The MMC may be utilised for a wide variety of medium- and high-power applications and the converter arms may be configured accordingly for connection to an external power system, including a transmission system or power grid, and/or to an electrical load. The converter arms may also be connected together, e.g., in a delta or star configuration if the MMC is configured as a static synchronous compensator (STATCOM).

The MMC can include one or more switching controllers. Each switching controller can be implemented at the converter level or at the converter arm level - i.e., for controlling switching in some or all of the submodules in a particular converter arm. Each switching controller can be implemented at the submodule level - i.e., where each submodule has its own switching controller. Individual switching controllers can be coordinated or operated as part of a controller for the MMC, for example.

Each switching controller can utilise one or more control schemes or sub-controllers to control electrical parameters such as power, current and voltage. Each switching controller can also utilise energy balancing to balance the energy content among the converter arms and among the individual active submodules within a converter arm if appropriate. The control of electrical parameters such as power, voltage and current can be implemented at the converter level, whereas energy balancing of individual active submodules can be partly done at the converter arm or submodule level, for example.

The switching controller can include a pulse width modulation (PWM) generator to generate the gate drive commands which are supplied to the respective gate drive unit of the semiconductor switches of one or more active submodules.

The switching controller can receive information about the DC voltage of each associated active submodule and information about the actual switching state that corresponds to the on- and off-states of the semiconductor switches. The switching controller can generate the gate drive commands according to the desired switching states of the individual active submodules. The controller can balance the energy content of the individual submodule energy storage devices by using certain switching states that increase, decrease or maintain the DC voltage of the submodules in order to balance and equalise the charge levels of the submodules and the converter arms.

The present invention further provides a method of operating an MMC according to claims 5 and 6. The present invention can ensure that a modulation margin is maintained for the case that one active submodule fails during operation and the remaining number of active submodules is not enough to generate the required magnitude of the output voltage. The present invention allows the MMC to operate with a minimum number of active submodules to minimise operational power losses. If one of the active submodule fails, the present invention inserts at least one "cold" redundant submodule into the converter arm to compensate for the loss of output voltage capability. The converter arm can be controlled in different ways as part of the inserting process to compensate for the lost voltage capability until the redundant submodule(s) is (are) fully inserted into the converter arm. Full insertion means that the DC voltage across the energy storage device of each redundant submodule is sufficiently high for switching operation to be started, i.e., the minimum DC voltage threshold mentioned above must be reached. If each submodule includes a DC voltage measurement unit, it can be used to compare a measured DC voltage against the DC voltage threshold to determine if the inserted redundant submodule can be transitioned to a switching operation. As explained above, the inserting process starts by activating the inserting switch which interrupts the converter arm current and diverts it into the redundant submodule(s) to charge the energy storage device(s). It takes a certain amount of time to charge the energy storage device(s) and the charging itself creates a voltage disturbance in the converter arm that has to be compensated by the remaining active submodules. Hence, a certain modulation margin has to be created to compensate for the loss of the failed submodule and the voltage disturbance as part of the inserting process.

Each switching controller can use two-axis vector control in a rotating reference frame, i.e., a dq-reference frame. Each switching controller can include a direct or "d-axis" controller and a quadrature (or "q-axis") controller. The d-axis controller and the q-axis controller can include one or more controllers such as proportional-integral (PI) or proportional-integral-derivative (PID) controllers.

The d-axis controller can control one or both of DC voltage and active power. DC voltage can be controlled for an individual active submodule or the average DC voltage can be controlled for some or all of the active submodules in the converter arm, for example. The d-axis controller can derive a signal from the difference between a demand signal (e.g., a DC voltage demand signal or an active power demand signal) and a measured or average value (e.g., a measured or average DC voltage or a measured active power). The d-axis controller can derive a d-axis current demand in the dq-reference frame. An output for the d-axis controller can be derived from the difference between the d-axis current demand and a d-axis current in the dq-reference frame that is derived from measured current values in the three-phase reference frame. As part of the inserting process, the DC voltage of one or more of the active submodules in the converter arm can be selectively increased by increasing the demanded DC voltage, e.g., by increasing the DC voltage demand signal or by using a supplementary DC voltage demand signal which is in addition to the DC voltage demand signal used during normal switching operation.

The q-axis controller can control reactive power. The q-axis controller can derive a signal from the difference between a demand signal (e.g., a reactive power demand signal) and a measured value (e.g., a measured reactive power). The q-axis controller can derive a q-axis current demand in the dq-reference frame. An output for the q-axis controller can be derived from the difference between the q-axis current demand and a q-axis current that is derived from the measured current values in the three-phase reference frame. As part of the inserting process, the reactive power can be controlled to be less capacitive (i.e., less than entirely capacitive) or to be inductive, but without being entirely inductive, by modifying the reactive power demand signal.

The outputs of the d-axis and q-axis controllers can be transformed to the three-phase reference frame and used by the PWM generator to derive the gate drive commands, optionally after voltage balancing.

The d-axis and q-axis controllers can control active and reactive current components independently. This is particularly useful for MMCs that transfer active power depending on their practical application and that operate in STATCOM mode for compensation purposes. For STATCOM, the MMC can be operated mainly with reactive power control, but where the d-axis controller can control short-term power demands to absorb or release energy to cover power losses or other special control functions such as active power fluctuations etc.

During the inserting period, the method can further comprise controlling the converter arm to do one or more of:
reduce the generation of capacitive reactive power (e.g., make the reactive power less capacitive and more inductive - or move from a leading power factor towards a lagging power factor by modifying a reactive power demand),
reduce the generation of active power,
increase the DC voltage of at least one active submodule (e.g., by increasing a DC voltage demand), and
set all power demands for at least one active submodule to zero.

The present invention provides a further method of operating or testing an MMC according to claims 7 to 13.

During the switching process, the at least one redundant submodule is inserted into the converter arm and switched as an active submodule. The switching process is used to temporarily increase output voltage or output power, e.g. as an overvoltage operation of the MMC, for a period of time which might range from a few minutes to several hours. The at least one inserted redundant submodule can be deactivated and taken out of the converter arm in a similar manner to a faulty active submodule by closing the contactor instead of the bypass switch. Such operation is possible because, unlike the fast-acting circuit breaker, the contactor is typically capable of being opened and closed several times. It will be readily understood that as compared with the activation of the fast-acting circuit breaker, opening the contactor will not provide rapid interruption of the converter arm current. But rapid interruption of the converter arm current is typically not necessary if the one or more redundant submodules are being inserted into the converter arm to increase the output voltage, as opposed to being inserted into the converter arm in response to a detected fault in an active submodule.

As part of the switching process, the step of operating the at least one inserted redundant submodule according to a switching operation further comprises the step of transitioning the or each inserted redundant submodule to a zero switching state before closing the contactor. As used herein, the "zero switching state" of a submodule is defined by the switching state of the one or more semiconductor switches and refers to a switching state where the energy storage device is bypassed. Prior to deactivating an inserted redundant submodule, it can be transitioned to the zero switching state. The MMC can continue to operate with the remaining active submodules and the contactor is closed to remove the at least one redundant submodule from the converter arm.

The testing process can be carried out as part of a pre-charge sequence of the MMC.

During the testing process, the semiconductor switches can be switched (i.e., turned on and off) to put the redundant submodule into different switching states.

The present invention provides *inter alia* the following technical benefits:
- The MMC can operate for normal switching operation with the lowest number of required submodules per converter arm in order to have the lowest semiconductor power losses (switching losses, conduction losses etc.) and avoid the need for "hot" redundant submodules.
- The inserting process allows at least one "cold" redundant submodule to be rapidly inserted into the converter arm without the need to stop the operation of the MMC.
- The use of a fast-acting circuit breaker in the inserting switch provides for rapid current interruption when the inserting switch is activated. Following activation of the fast-acting circuit breaker, and during the energy storage device charging process for the redundant submodule, which must take place before switching operation can be started and the redundant submodule is fully inserted, the contactor can be opened to increase the voltage rating without the contactor having to interrupt the converter arm current. This is beneficial because contactors which can provide a higher voltage rating are often not designed for rapid operation or cannot provide current interruption at the levels intended. The combination of a fast-acting circuit breaker and a series-connected contactor therefore provides for rapid current interruption (which can include diverting the converter arm current into a parallel connected fuse) and for better insulation for higher voltages during the energy storage device charging process through a slower-operating but higher rated contactor or disconnector.
- The contactor allows a redundant submodule to be tested and in some arrangements for one or more redundant submodules to be temporarily inserted into the converter arm to increase output voltage or the output power by increasing the number of active redundant submodules in the converter arm, e.g., during an overvoltage operation of the MMC and in response to external operating conditions.

Unless otherwise stated, any reference herein to components being "connected" includes both a direct and an indirect electrical connection or coupling, e.g., with the option for components to be electrically connected or coupled together by means of one or more interposing components.

### Drawings

Figure 1 shows a modular multilevel converter (MMC) according to the present invention implemented as a variable speed drive (VSD);
Figure 2 shows an MMC according to the present invention implemented as an AC/AC converter;
Figures 3 and 4 show an MMC according to the present invention implemented as a static synchronous compensator (STATCOM);
Figure 5A shows a first converter arm according to the present invention with a plurality of series-connected submodules;
Figure 5B shows a second converter arm according to the present invention with a plurality of series-connected submodules;
Figure 6A shows a first inserting switch with a fast-acting circuit breaker, which does not form part of the present invention;
Figure 6B shows a second inserting switch with a fast-acting circuit breaker and a contactor connected in series;
Figures 6C to 6E show solid state circuit breakers with anti-parallel thyristors, IGBTs and JFETs which can implement the fast-acting circuit breaker of Figure 6A of Figure 6B, but which do not form part of the present invention;
Figure 6F shows a circuit breaker with a mechanical or electro-mechanical switch connected in parallel with a fuse which can implement the fast-acting circuit breaker of Figure 6A or Figure 6B;
Figure 6G shows a circuit breaker with a pyrotechnic switch connected in parallel with a fuse which can implement the fast-acting circuit breaker of Figure 6A or Figure 6B;
Figure 7A shows the current path through a redundant submodule during normal operation of the MMC when the inserting switch is closed;
Figure 7B shows the current path through a redundant submodule after it has been inserted into the converter arm when the inserting switch is open;
Figure 7C shows the current path through an inserted redundant submodule in a first zero switching state;
Figure 7D shows the current path through an inserted redundant submodule in a second zero switching state;
Figure 8 shows a first control scheme for a switching controller;
Figure 9 shows power and voltage waveforms for the first control scheme;
Figure 10 shows a second control scheme for a switching controller; and
Figure 11 shows power and voltage waveforms for the second control scheme.

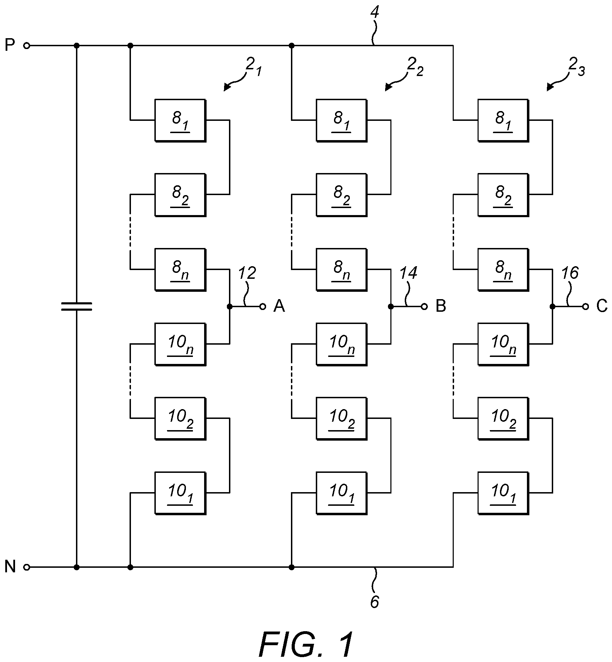

Figure 1 shows a modular multilevel converter (MMC) implemented as a variable speed drive (VSD). The MMC includes three converter arms 2₁, 2₂ and 2₃ connected in parallel between first and second direct current (DC) buses 4, 6. Each converter arm is divided into an upper arm and a lower arm. Each upper arm includes n series-connected submodules 8₁, 8₂, ..., 8ₙ and each lower arm includes *n* series-connected submodules 10₁, 10₂, ..., 10*n*, where *n* is any suitable integer.

The connection between the upper arm and the lower arm of the first converter arm 2₁ defines a first alternating current (AC) bus 12. The connection between the upper arm and the lower arm of the second converter arm 2₂ defines a second AC bus 14. The connection between the upper arm and the lower arm of the third converter arm 2₃ defines a third AC bus 16. The first, second and third AC buses 12, 14 and 16 can be connected to a three-phase AC load or a three-phase AC supply. The first and second DC buses 4 and 6 can be connected to a DC load or a DC supply and can include a DC link with one or more energy storage devices (e.g., capacitor).

The upper arm of each converter arm includes a redundant submodule 8₁ and (*n*-1) active submodules 8₂, ..., 8ₙ.

The lower arm of each converter arm includes a redundant submodule 10₁ and (*n*-1) active submodules 10₂, ..., 10ₙ.

The MMC can convert a DC input voltage to an AC output voltage or *vice versa* by operating the active submodules 8₂, ..., 8ₙ and 10₂, ..., 10ₙ in a manner well known to the skilled person.

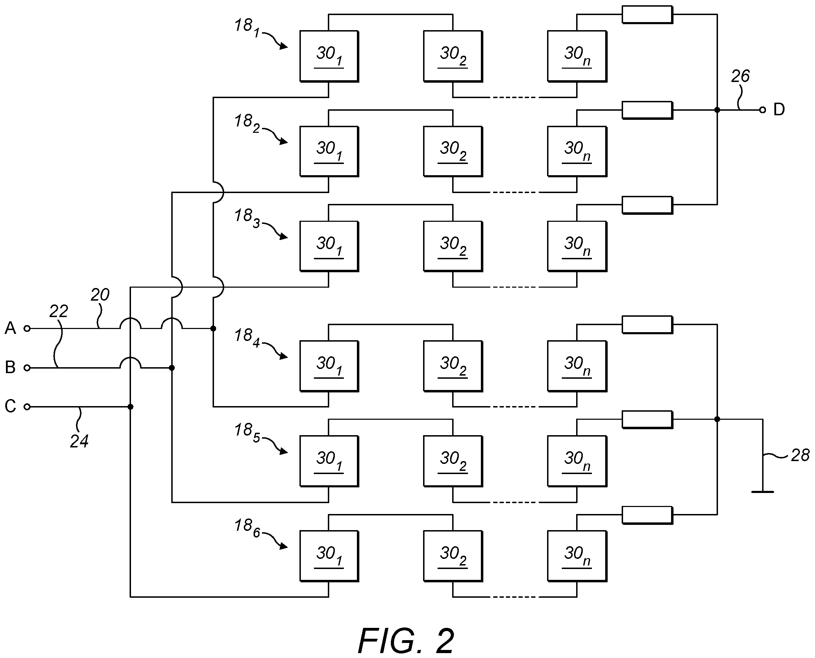

Figure 2 shows an MMC implemented as an AC/AC converter. The MMC includes six converter arms 18₁, 18₂, ..., 18₆. The first and fourth converter arms 18₁ and 18₄ are connected in parallel to a first AC bus 20 at a first end. The second and fifth converter arms 18₂ and 18₅ are connected in parallel to a second AC bus 22 at a first end. The third and sixth converter arms 18₃ and 18₆ are connected in parallel to a third AC bus 24 at a first end. The first, second and third converter arms 18₁, 18₂ and 18₃ are connected to a fourth AC bus 26 at a second end. The fourth, fifth and sixth converter arms 18₄, 18₅ and 18₆ are connected to ground 28 at a second end.

Each converter arm 18₁, 18₂, ..., 18₆ includes *n* series-connected submodules 30₁, 30₂, ..., 30ₙ, where *n* is any suitable integer.

Each converter arm includes a redundant submodule 30₁ and (*n*-1) active submodules 30₂, ..., 30ₙ.

The MMC can convert a three-phase AC input voltage to a single-phase AC output voltage at a different frequency by operating the active submodules 30₂, ..., 30ₙ. In one example, the MMC can be used to supply AC power from a power grid operating at 50 Hz to the overhead line of an electric rail network operating at 16.7 Hz.

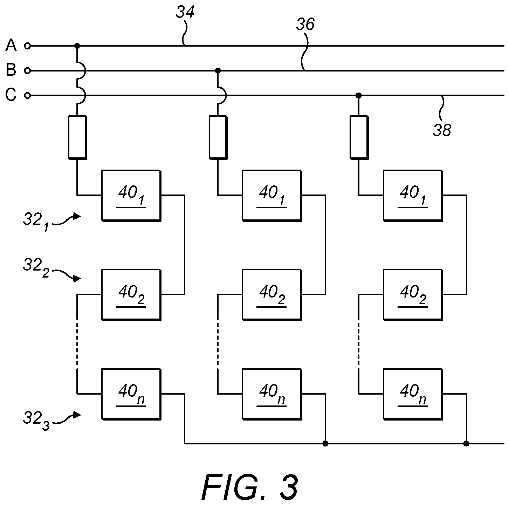

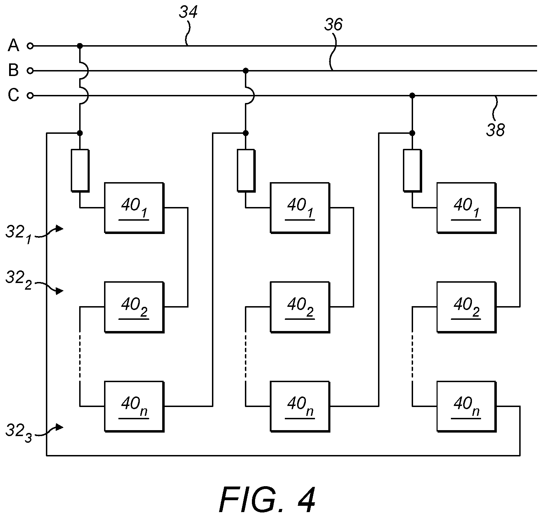

Figures 3 and 4 show an MMC implemented as a static synchronous compensator (STATCOM).

Each MMC includes three converter arms 32₁, 32₂ and 32₃. The first converter arm 32₁ is connected to a first AC bus 34 at a first end. The second converter arm 32₂ is connected to a second AC bus 36 at a first end. The third converter arm 32₃ is connected to a third AC bus 38 at a first end.

In the MMC shown in Figure 3, the first, second and third converter arms 32₁, 32₂ and 32₃ are connected together in a star configuration at their second ends. In the MMC shown in Figure 4, the first, second and third converter arms 32₁, 32₂ and 32₃ are connected together in a delta configuration at this second ends.

Each converter arm 32₁, 32₂ and 32₃ includes *n* series-connected submodules 40₁, 40₂, ..., 40ₙ, where *n* is any suitable integer.

Each converter arm 32₁, 32₂ and 32₃ includes a redundant submodule 40₁ and (*n*-1) active submodules 40₂, ..., 40ₙ.

By operating the active submodules 40₂, ..., 40ₙ the MMC can act as a source or sink of reactive AC power for regulating an AC transmission network, for example.

During normal operation of each of the MMCs shown in Figures 1 to 4, the redundant submodules (i.e., submodules 8₁, 10₁, 30₁ and 40₁) do not play an active role.

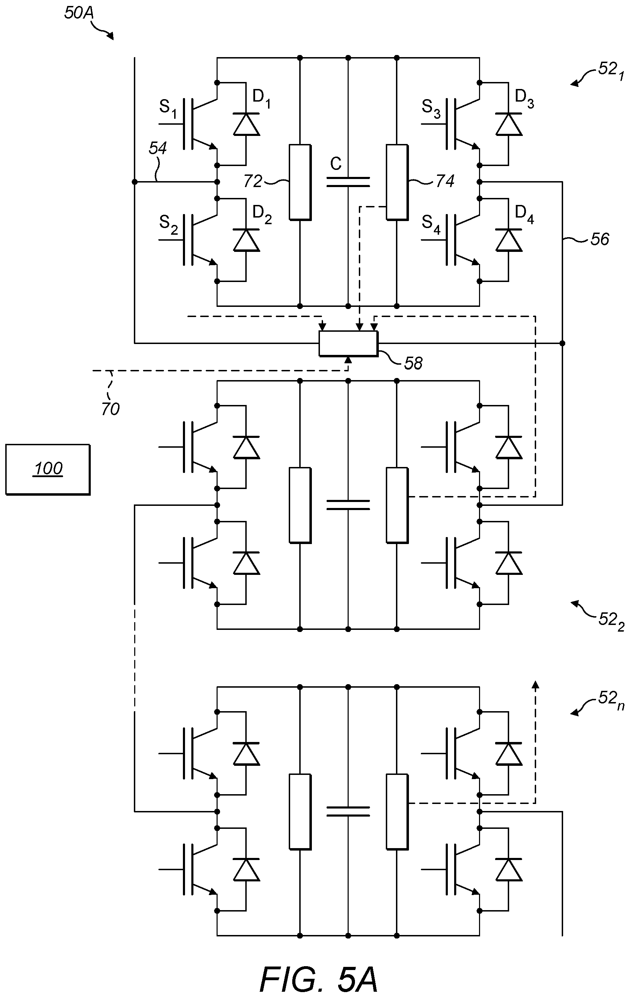

Figure 5A shows a generic first converter arm 50A that can be implanted in any of the MMCs shown in Figures 1 to 4. The converter arm 50A includes *n* series-connected submodules 52₁, 52₂, ..., 52ₙ, where *n* is any suitable integer.

Submodule 52₁ is a redundant submodule.

Submodules 52₂, ..., 52ₙ are active submodules.

Each submodule 52₁, 52₂, ..., 52ₙ is shown as having a full-bridge topology. But it will be readily understood that other suitable topologies can also be used. In the full-bridge topology, each submodule comprises a first arm with two controllable semiconductor switches S₁ and S₂ connected in series and a second arm with two controllable semiconductor switches S₃ and S₄ connected in series. Each semiconductor switch is shown as an IGBT with an anti-parallel connected diode D₁, D₂, ..., D₄, but it will be readily understood that other controllable semiconductor switches can be used.

The first and second arms are connected in parallel. An energy storage device (e.g., a capacitor C) is connected in parallel with both the first and second arms. A junction of the semiconductor switches S₁ and S₂ in the first arm defines a first AC terminal 54 and a junction of the semiconductor switches S₃ and S₄ in the second arm defines a second AC terminal 56.

The first AC terminal 54 of the redundant submodule 52₁ (i.e., the submodule at a first end of the converter arm 50A) is connected to an AC bus or a DC bus as shown in Figures 1 to 4. The second AC terminal of the *n*th submodule 52ₙ (i.e., the submodule at a second end of the converter arm 50A) is connected to an AC bus or a DC bus - as shown in Figures 1 and 2 - or to another converter arm of the MMC as shown in Figures 3 and 4. For all other submodules 52₁, 52₂, ..., 52₍ₙ₋₁₎, the second AC terminal is connected to the first AC terminal of the next submodule in the converter arm. That is, the second AC terminal 56 of the redundant submodule 52₁ is connected to the first AC terminal of the first active submodule 52₂, the second AC terminal of the first active submodule 52₂ is connected to the first AC terminal of the second active submodule, the second AC terminal of the second active submodule is connected to the first AC terminal of the third active submodule, and so on, until the *n*th submodule 52ₙ.

Although the redundant submodule 52₁ is shown at an end of the converter arm 50A, it will be readily understood that it can be positioned anywhere in the converter arm as required. It will also be readily appreciated that the converter arm can include two or more redundant submodules if appropriate, including two or more redundant submodules in each upper arm and each lower arm in the MMC shown in Figure 1.

An inserting switch 58 is connected between the first and second AC terminals 54 and 56 of the redundant submodule 52₁.

Although not shown in Figure 5A, the active submodules 52₂, ..., 52ₙ will typically include a bypass switch connected between the respective first and second AC terminals that can be closed to bypass the active submodule in the event of a fault.

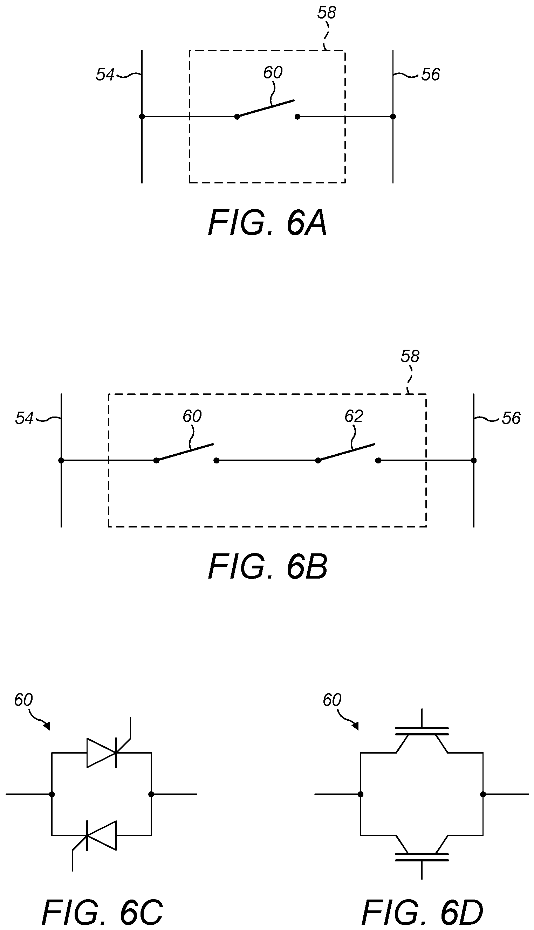

An example of a first inserting switch 58 that does not form part of the present invention is shown in Figure 6A and includes:
- a fast-acting circuit breaker 60 adapted to be opened in response to a detected fault in an active submodule.

An example of a second inserting switch 58 of the present invention is shown in Figure 6B and includes:
- a fast-acting circuit breaker 60 adapted to be opened in response to a detected fault in an active submodule, and
- an electrically-controlled contactor 62, e.g., a slower acting mechanical or electro-mechanical switch, connected in series with the fast-acting circuit breaker 60.

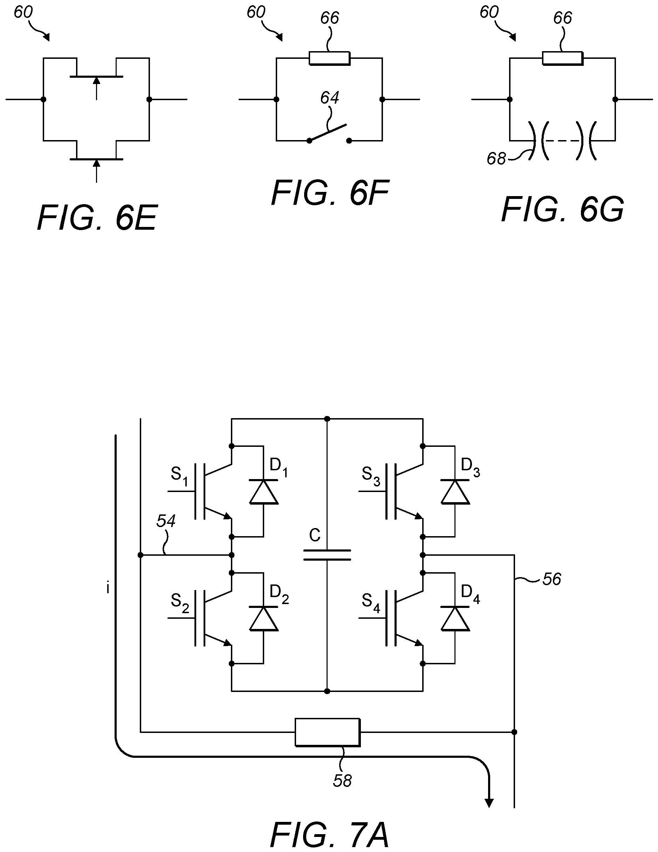

Figures 6C to 6E show examples of solid state circuit breakers which do not form part of the present invention and comprise a pair of anti-parallel thyristors, IGBTs and JFETs, respectively, that can be turned on and off by gate drive units (not shown) in response to an activation signal. The JFETs shown in Figure 6E can be implemented with silicon carbine (SiC) to maintain very low on-state losses, for example.

The fast-acting circuit breaker 60 shown in Figures 6A and 6B can be a mechanical or electro-mechanical circuit breaker. For example, the fast-acting mechanical or electro-mechanical circuit breaker 60 can be implemented using a spring-tightened opening switch where activation releases the tightened spring to rapidly open the switch and directly interrupt the converter arm current.

As shown in Figure 6F, the fast-acting circuit breaker 60 shown in Figures 6A and 6B can include:
- a fast-acting mechanical or electro-mechanical switch 64 adapted to be opened in response to a detected fault in an active submodule, and
- a fuse 66 connected in parallel with the fast-acting mechanical or electro-mechanical switch 64.

In this arrangement, the fast-acting mechanical or electro-mechanical switch 64 will not break the current, but diverts current into the fuse 66 when it is opened. The fast-acting mechanical or electro-mechanical switch 64 can be implemented using a spring-tightened opening switch where activation releases the tightened spring to rapidly open the switch and directly interrupt the converter arm current.

Figure 6G shows a specific arrangement where the fuse 66 is connected in parallel with one or more series-connected pyrotechnic switches 68. Using two or more series connected pyrotechnic switches will increase the AC voltage insulation characteristic of the fast-acting circuit breaker 60. Each pyrotechnic switch typically includes an electrically-activated pyrotechnic charge as described above.

During normal operation of the MMC, the inserting switch 58 is closed (i.e., both the fast-acting circuit breaker 60 and the contactor 62 are in a closed position) so that the redundant submodule 52₁ is bypassed and the converter arm current flows between the first and second AC terminals 54 and 56 through the inserting switch. If the fast-acting circuit breaker 60 is implemented as a solid state circuit breaker, the controllable semiconductor switches are turned on (i.e., maintained in a conducting state) during normal operation of the MMC so it is beneficial if on-state losses are low. For the indicated current direction, the current path during normal operation is shown in Figure 7A.

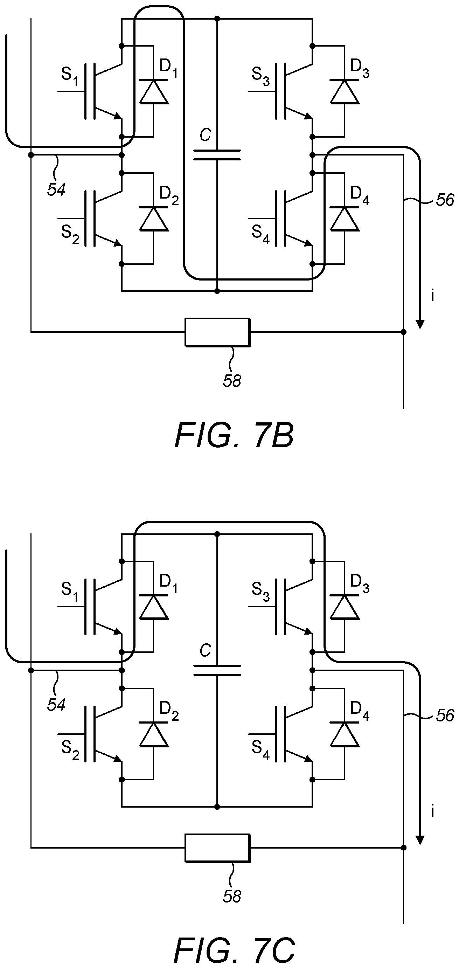

If a fault is detected in one of the active submodules 52₂, ..., 52ₙ, the faulty active submodule may be bypassed - e.g., by closing a bypass switch connected between the AC terminals of the faulty active submodule in a known manner. The redundant submodule 52₁ is inserted into the converter arm 50A to take the place of the bypassed active submodule. The redundant submodule 52₁ is inserted into the converter arm 50A by activating its fast-acting circuit breaker 60 - e.g., by sending an activation signal 70 generated by a fault detection device (not shown). If the fast-acting circuit breaker 60 is implemented as a solid state circuit breaker, the activation can involve turning off the controllable semiconductor switches (i.e., switching them to a non-conducting state) to interrupt the converter arm current flowing through the inserting switch 58. If the fast-acting circuit breaker 60 is implemented as a mechanical or electro-mechanical switch, the activation can involve opening the mechanical or electro-mechanical switch to interrupt the converter arm current flowing through the inserting switch 58. If the fast-acting circuit breaker 60 is implemented as a mechanical or electro-mechanical switch 64 connected in parallel with a fuse 66, the activation can involve opening the mechanical or electro-mechanical switch to divert converter arm current into the fuse, which will rupture or melt to interrupt the converter arm current flowing through the inserting switch 58. In the specific arrangement of the fast-acting circuit breaker 60 shown in Figure 6G, the activation can involve activating the pyrotechnic charges of the one or more pyrotechnic switches 68 to divert the converter arm current into the parallel-connected fuse 66, which will rupture or melt to interrupt the converter arm current. In each case, the activation of the fast-acting circuit breaker 60 will open the electrical path between the first and second AC terminals 54 and 56 of the redundant submodule 52₁. Opening the electrical path diverts the converter arm current through the redundant submodule 52₁. In particular, the converter arm current flows through the redundant submodule 52₁ along the current path shown in Figure 7B to immediately start to charge the capacitor C. For the indicated current direction, the current flows through diodes D₁ and D₄. For the reverse current direction, the current flows through diodes D₃ and D₂.

After the fast-acting circuit breaker 60 has been activated to open the electrical path between the first and second AC terminals 54 and 56, the contactor 62 shown in Figure 6B can be opened to increase the voltage rating of the inserted redundant submodule 52₁. The contactor 62 can be opened and closed by a controller (not shown) which is coordinated with the fault detection device (not shown) but is also capable of operating independently - e.g., to open and close the contactor for testing or other purposes.

The inserted redundant submodule 52₁ is fully inserted into the converter arm 50A and can start normal switching operation as soon as the DC voltage across the capacitor C reaches a minimum DC voltage threshold (e.g., about 250 to 500 V). The DC voltage can be measured by a DC voltage measurement device 72 which is connected in parallel with the capacitor C.

An auxiliary power supply 74 is also connected in parallel with the capacitor C of the redundant submodule 52₁ and supplies power to the inserting switch 58 for activating the fast-acting circuit breaker 60 and the contactor 62 in response to the activation signal 70. The inserting switch 58 also receives power from the auxiliary power supply of the neighbouring active submodule 52₂ as shown. The inserting switch 58 can also receive power from an external power source (not shown) or from the fault detection device (not shown) that provides the activation signal 70.

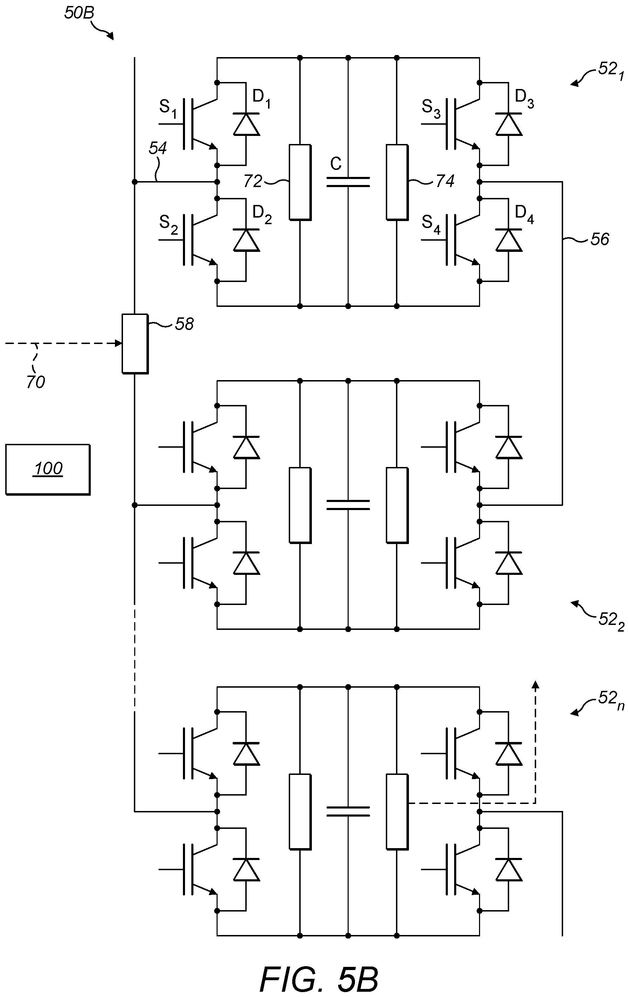

Figure 5B shows a generic second converter arm 50B that can be implanted in any of the MMCs shown in Figures 1 to 4. The converter arm 50B is closely related to the converter arm 50A shown in Figure 5A and like parts have been given the same reference sign. The converter arm 50B includes *n* series-connected submodules 52₁, 52₂, ..., 52ₙ, where *n* is any suitable integer.

Submodules 52₁ and 52₂ are redundant submodules.

Submodules ..., 52ₙ are active submodules.

An inserting switch 58 is connected between the first AC terminal 54 of the first redundant submodule 52₁ and the second AC terminal of the second redundant submodule 52₂. The inserting switch 58 can be implemented as shown in Figures 6A to 6G.

During normal operation of the MMC, the inserting switch 58 is closed (i.e., both the fast-acting circuit breaker 60 and the contactor 62 are in a closed position) so that the redundant submodules 52₁ and 52₂ are bypassed and the converter arm current flows between the first AC terminal 54 of the first redundant submodule 52₁ and the second AC terminal of the second redundant submodule 52₂ through the inserting switch. If a fault is detected in one of the active submodules ..., 52ₙ, the faulty active submodule may be bypassed - e.g., by closing a bypass switch connected between the AC terminals of the faulty active submodule in a known manner. The redundant submodules 52₁ and 52₂ are inserted into the converter arm 50B to take the place of the bypassed active submodule. The redundant submodules 52₁ and 52₂ are inserted into the converter arm 50B by activating the fast-acting circuit breaker 60 - e.g., by sending an activation signal 70 generated by a fault detection device (not shown). The activation of the fast-acting circuit breaker 60 will open the electrical path between the first AC terminal 54 of the first redundant submodule 52₁ and the second AC terminal of the second redundant submodule 52₂. Opening the electrical path diverts the converter arm current through the series-connected redundant submodules 52₁ and 52₂ to charge the capacitors C.

After the fast-acting circuit breaker 60 has been activated, the contactor 62 shown in Figure 6B can be opened by the controller (not shown) to increase the voltage rating of the inserted redundant submodules 52₁ and 52₂.

The contactor 62 shown in Figure 6B can also be used for testing the redundant submodule(s), e.g., the redundant submodule 52₁ shown in Figure 5A or the redundant submodules 52₁, 52₂ shown in Figure 5B. For example, during a pre-charge sequence of the MMC where the energy storage devices of the active submodules are being charged, the contactor 62 can be opened to divert pre-charge current to the redundant submodule(s) for testing purposes. The fast-acting circuit breaker 60 will remain closed. The value of one or more parameters of each redundant submodule such as DC voltage or current can be measured or calculated and each measured or calculated value can be compared against a respective threshold or expected value to determine if the redundant submodule is operating normally.

Once the testing process has been carried out, the contactor 62 is closed and the pre-charge sequence of the MMC is completed.

The contactor 62 can also be opened to operate the MMC in an overvoltage operation where the redundant submodule(s), e.g., the redundant submodule 52₁ shown in Figure 5A or the redundant submodules 52₁, 52₂ shown in Figure 5B, are temporarily inserted into the converter arm to provide an increased output voltage. The contactor 62 can be opened to divert the converter arm current to the redundant submodule(s) which can then be transitioned to a switching operation as described above and temporarily operated as an active submodule. The fast-acting circuit breaker 60 will remain closed. The contactor 62 is subsequently closed to remove the redundant submodule(s) from the converter arm.

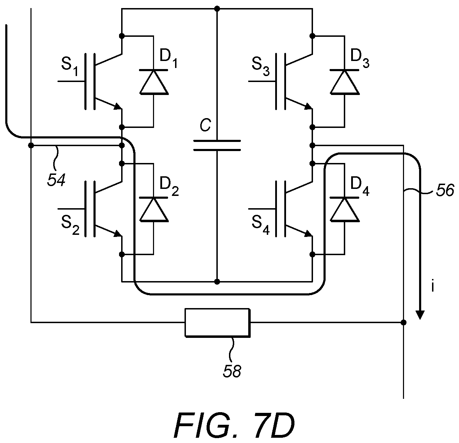

Before the contactor 62 is closed to remove the redundant submodule(s) from the converter arm, the redundant submodule(s) can be transitioned by the switching controller to a zero switching state where the capacitor C is bypassed. Figure 7C shows a first zero switching state for the inserted redundant submodule where the semiconductor switches S₁ and S₃ are turned on and semiconductor switches S₂ and S₄ are turned off. For the indicated current direction, the current flows through diode D₁ and semiconductor switch S₃ For the reverse current direction, the current flows through diode D₃ and semiconductor switch S₁. The converter arm current therefore flows directly between the first AC terminal 54 and the second AC terminal 56 and bypasses the capacitor C as shown. Figure 7D shows a second zero switching state for the inserted redundant submodule where the semiconductor switches S₂ and S₄ are turned on and semiconductor switches S₁ and S₃ are turned off. For the indicated current direction, the current flows through semiconductor switch S₂ and diode D₄. For the reverse current direction, the current flows through semiconductor switch S₄ and diode D₂. The converter arm therefore flows directly between the first AC terminal 54 and the second AC terminal 56 and bypasses the capacitor C as shown.

After the redundant submodule(s) have been transitioned to the zero switching state, the MMC can continue to operate with the remaining active submodules before the contactor 62 is finally closed.

With reference to the generic converter arms 50A and 50B shown in Figures 5A and 5B, respectively, each active submodule of the converter arm can be controlled using a suitable switching controller 100. In particular, the switching controller 100 can use electrical parameters to generate gate drive commands which are supplied to the respective gate drive unit (not shown) of each semiconductor switches S₁, S₂, ..., S₄ of each submodule. The switching controller can be used to generate gate drive commands for two or more submodules in the converter arm. In this arrangement, it will be assumed that the switching controller 100 is implemented at the converter arm level and generates gate drive commands for all of the active submodules in the converter arm. The gate drive units are controlled by the gate drive commands to turn the semiconductor switches S₁, S₂, ..., S₄ on and off according to a pulse width modulation (PWM) control scheme. The semiconductor switches S₁, S₂, ..., S4 are switched to control the operation of each active submodule and consequently the respective converter arm and the MMC as a whole.

During normal operation of the MMC, i.e., where each converter arm 50A or 50B has at least a minimum number of active submodules in switching operation, the MMC can provide active power and/or reactive power (e.g., for static synchronous compensation) as required. More particularly, each active submodule can be controlled to provide a required level of active power and/or a required level of reactive power. Each active submodule can also be controlled to maintain a required level of DC voltage.

If there is a fault in an active submodule which would mean that the converter arm 50A or 50B has less than the minimum number of active submodules in switching operation, the redundant submodule(s) will be inserted into the converter arm by activating the inserting switch 58. However, during the inserting period between the fault being detected and the redundant submodule(s) being fully inserted into the converter arm 50A or 50B the active submodules can be controlled differently by the switching controller 100 as compared with how they are controlled during normal operation of the converter arm.

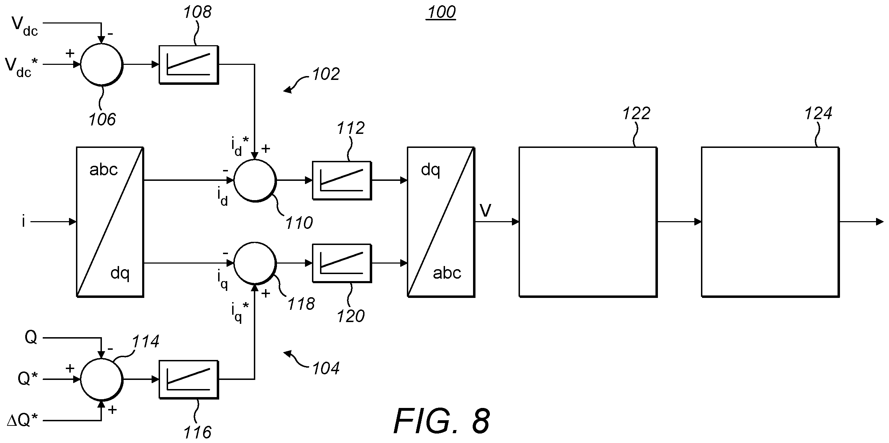

A first control scheme for the switching controller 100 is shown in Figure 8. The control scheme uses two-axis vector control in a rotating reference frame, i.e., a dq-reference frame.

A first axis controller 102 is a direct (or "d-axis") controller and a second axis controller 104 is a quadrature (or "q-axis") controller.

The AC current i for the active submodule may be measured and converted from the three-phase reference frame to the dq-reference frame using a suitable transformation angle (e.g., by means of a Park transformation). In the dq-reference frame, the measured AC current has a d-axis component i_{d} (the "d-axis AC current") and a q-axis component i_{q} (the "q-axis AC current").

A first summing node 106 calculates the difference between a DC voltage demand V_{dc}* that sets the required level for the DC voltage of the active submodules, and a measured DC voltage V_{dc}. The DC voltage provided to the first summing node 106 can also be an average value of previous measurements of the DC voltage.

The output of the first summing node 106 is provided to a first proportional-integral (PI) controller 108. (It will be understood that although the control scheme is described as using PI controllers, other suitable controllers can also be used - including proportional-integral-derivative (PID) controllers, for example.) The output of the first controller 108 is a d-axis AC current demand i_{d}* which is provided to a second summing node 110. The second summing node 110 calculates the difference between the d-axis AC current demand i_{d}* and the d-axis AC current i_{d}. The output of the second summing node 110 is provided to a second PI controller 112.

A third summing node 114 calculates the difference between (i) the combined total of a reactive power demand Q* that sets the required level for the reactive power of the active submodules and a supplemental reactive power demand ΔQ*, and (ii) a measured reactive power Q of the active submodules. During normal control of the converter arm, the supplemental reactive power demand ΔQ* can be set to zero, but when set to a required value it allows the reactive power (and hence the power factor) for the active submodules to be controlled differently during the inserting period. It is also possible to modify the reactive power demand Q* during the inserting period instead of using the supplemental reactive power demand ΔQ*.

The output of the third summing node 114 is provided to a third PI controller 116. The output of the third PI controller 116 is a q-axis AC current demand i_{q}* which is provided to a fourth summing node 118. The fourth summing node 118 calculates the difference between the q-axis AC current demand i_{q}* and the q-axis AC current i_{q}. The output of the fourth summing node 118 is provided to a fourth PI controller 120.

The outputs of the second and fourth PI controllers 112, 120 are converted from the dq-reference frame to the three-phase reference frame using a suitable transformation angle to provide an AC voltage V. The AC voltage V is provided to a voltage controller 122 which can balance voltage between the various converter arms and between the active submodules of the converter arm. The output of the voltage controller 122 is provided to a PWM generator 124 to generate the gate drive signals for the gate drive units for the semiconductor switch S₁, S₂, ..., S₄ of the active submodules.

The DC voltage demand V_{DC}* and reactive power demand Q* are used to control the switching of the semiconductor switches S₁, S₂, ..., S₄ of the active submodule to achieve the required DC voltage and reactive power, respectively. Although not shown in Figure 8 it will be understood that the first control scheme for the controller 100 can also control active power of the active submodules if this is required, e.g., for active power transmission to an electrical machine or other electrical load connected to the MMC. Such active power control can be carried out instead of or in addition to the DC voltage control, for example.

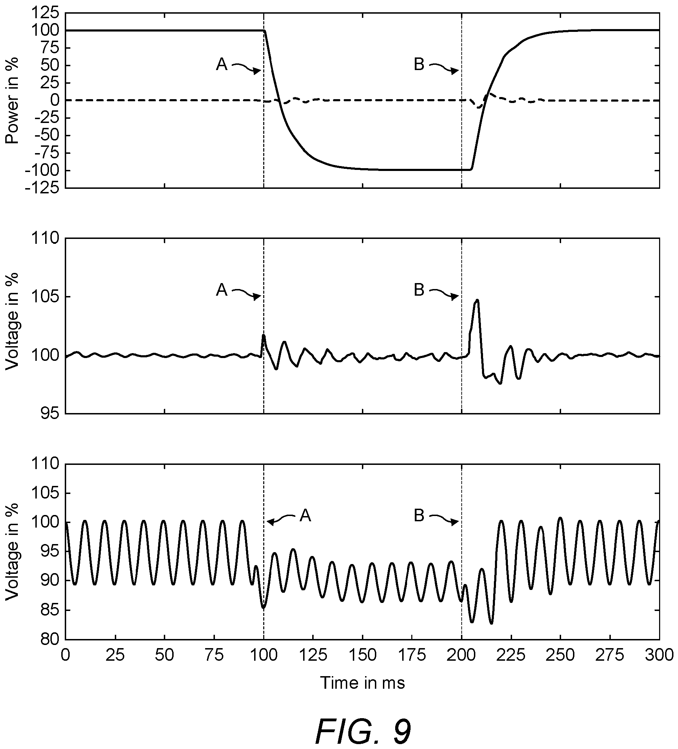

The supplemental reactive power demand ΔQ* is used to control the switching of the semiconductor switches S₁, S₂, ..., S₄ of the active submodules to achieve the required reactive power during the inserting period. The effect of the control is shown in Figure 9.

In Figure 9 the upper waveform shows active power (dashed line) and reactive power (solid line) versus time, the middle waveform shows the mean value of the DC voltage in a converter arm versus time, and the lower waveform shows the sum of the DC voltages in a converter arm versus time. It is assumed that at t=100 ms (labelled "A") one of the active submodules in the converter arm fails and that at t=200 ms (labelled "B") the redundant submodule is fully inserted into the converter arm and its switching operation is started.

For the period between t=100 ms and t=200 ms, the converter arm has one active submodule less than its minimum number of active submodules needed for normal switching operation. When the fault is detected in the active submodule and its bypass switch is activated, the first control scheme can adjust the supplemental reactive power demand ΔQ* from zero to a suitable value in order to control the reactive power that is required for each of the remaining active submodules in the converter arm. A negative value of ΔQ* corresponds to an increase in inductive reactive power or less capacitive reactive power. Hence, the reactive power demand can be shifted from capacitive reactive power (leading power factor) that requires a higher voltage magnitude in the converter arm towards less capacitive reactive power - or even inductive reactive power. Depending on the system and source impedance, more inductive reactive power is adjusted to reduce the required voltage magnitude.

The upper waveform shows that at t=100 ms the reactive power changes from being entirely capacitive (or positive, leading) to being entirely inductive (or negative, lagging) with a corresponding change in power factor. The reactive power can also be controlled to be less capacitive (i.e., less than entirely capacitive) or to be inductive but without being entirely inductive. Put another way, the reactive power can also be controlled to be more inductive. At t=200 ms the supplemental reactive power demand ΔQ* can revert back to zero when the redundant submodule has been fully inserted into the converter arm such that the converter arm has the minimum number of active submodules needed for normal switching operation. The upper waveform shows that at t=200 ms the reactive power changes from being entirely inductive to entirely capacitive with a corresponding change in power factor.

The upper waveform also shows that active power remains substantially constant at about 0%.

The middle waveform shows that the mean value of the DC voltages in the converter arm remains substantially constant - with some more significant fluctuations around t=100 ms and t=200 ms caused by the power factor reversal from being a capacitive power factor to an inductive power factor.

The lower waveform shows a reduction in the sum of the DC voltages in the converter arm between t=100 ms and t=200 ms as a result of the power factor reversal.

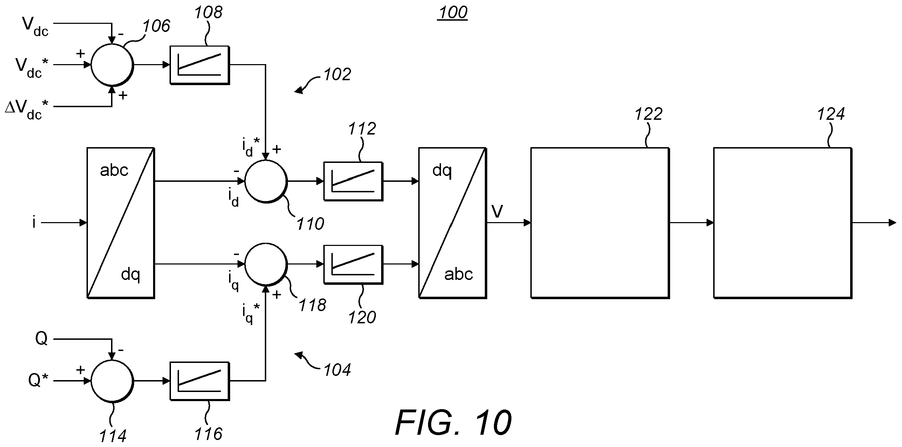

A second control scheme for the switching controller 100 is shown in Figure 10. The second control scheme is similar to the first control scheme shown in Figure 8 and like parts have been given the same reference sign.

In the second control scheme, there is no supplemental reactive power demand ΔQ* provided to the third summing node 114. The first summing node 106 calculates the difference between (i) the combined total of a DC voltage demand V_{DC}* that sets the required level for the DC voltage of the active submodules and a supplemental DC voltage demand ΔV_{DC}*, and (ii) a measured DC voltage V_{DC} of the active submodules. The DC voltage provided to the first summing node 106 can also be an average value of previous measurements of the DC voltage.

During normal control of the converter arm, the supplemental DC voltage demand ΔV_{DC}* can be set to zero, but when set to a required value it allows DC voltage to be controlled differently during the inserting period. It is also possible to increase the DC voltage demand V_{DC}* during the inserting period instead of using the supplemental DC voltage demand ΔV_{DC}*.

The DC voltage demand V_{DC}* and reactive power demand Q* are used to control the switching of the semiconductor switches S₁, S₂, ..., S₄ of the active submodules to achieve the required DC voltage and reactive power, respectively. Although not shown in Figure 10 it will be understood that the second control scheme for the controller 100 can also control active power of the active submodules if this is required, e.g., for active power transmission to an electrical machine or other electrical load connected to the MMC. Such active power control can be carried out in addition to the DC voltage control, for example.

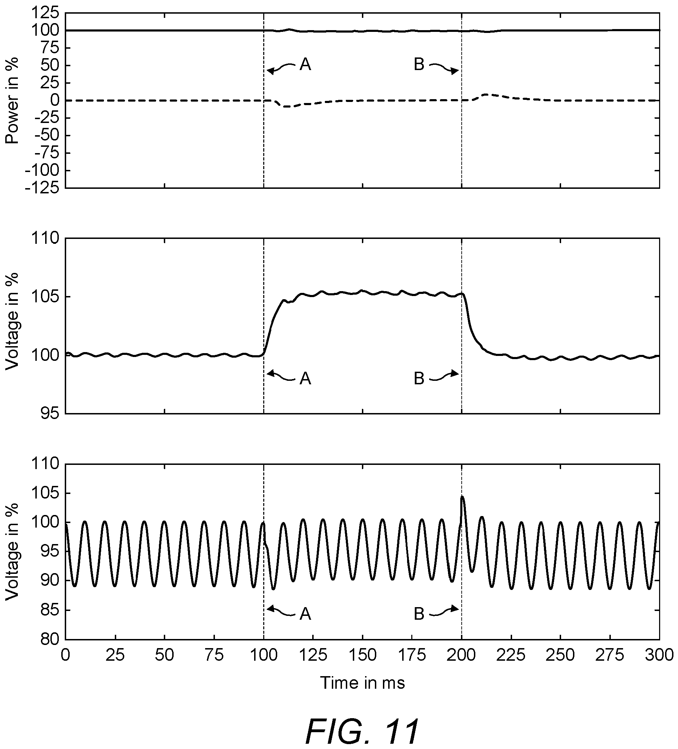

The supplemental DC voltage demand ΔV_{DC}* is used to control the switching of the semiconductor switches S₁, S₂, ..., S₄ of the active submodules to achieve the required DC voltage during the inserting period through absorption of energy from the electrical grid. The required DC voltage during the inserting period is higher than the DC voltage required during normal operation of the converter arm. The effect of the control is shown in Figure 11.

In Figure 11 the upper waveform shows active power (dashed line) and reactive power (solid line) versus time, the middle waveform shows the mean value of the DC voltage in a converter arm versus time, and the lower waveform shows the sum of the DC voltages in a converter arm versus time. It is assumed that at t=100 ms (labelled "A") one of the active submodules in the converter arm fails and that at t=200 ms (labelled "B") the redundant submodule is inserted into the converter arm and switching operation is started.

For the period between t=100 ms and t=200 ms, the converter arm has one active submodule less than its minimum number of active submodules needed for normal switching operation. When the fault is detected in the active submodule and its bypass switch is activated, the first control scheme can adjust the supplemental DC voltage demand ΔV_{DC}* from zero to a suitable value, e.g., about 5% of the DC voltage required during normal operation, in order to increase the DC voltage that is required by each of the remaining active submodules in the converter arm.

The middle waveform shows that at t=100 ms the mean value of the DC voltage increases from about 100% to about 105% (i.e., by about 5%) as a result of the increase in the DC voltage demand. At t=200 ms the supplemental DC voltage demand ΔV_{DC}* can revert back to zero when the redundant submodule has been fully inserted into the converter arm such that the converter arm has the minimum number of active submodules needed for normal switching operation.

The upper waveform shows that reactive power remains substantially constant at 100%. The active power also remains substantially constant at 0% but with a slight reduction between t=100 ms and t=200 ms where active power is absorbed in order to increase the DC voltages in the converter arm.

The lower waveform shows that the sum of the DC voltages in the converter arm remains substantially constant with only slight fluctuations at t=100 ms and t=200 ms.

## Claims

1. A converter arm (50A; 50B) for a modular multilevel converter, the converter arm (50A; 50B) comprising:
a plurality of series-connected submodules (52₁, 52₂, ..., 52ₙ), each submodule comprising:
a plurality of semiconductor devices, each semiconductor device including at least a controllable semiconductor switch (S₁, S₂, ..., S₄);
an energy storage device (C); and
first and second alternating current AC terminals (54, 56);
wherein at least one of the plurality of submodules is an active submodule (52₂, ..., 52ₙ; ..., 52ₙ);
wherein at least one of the plurality of submodules is a "cold" redundant submodule (52₁; 52₁, 52₂) that is normally bypassed and adapted to be inserted into the converter arm (50A; 50B) in response to a fault in an active submodule (52₂, ..., 52ₙ; ..., 52ₙ);
wherein the converter arm (50A; 50B) further comprises an inserting switch (58), wherein:
(a) the inserting switch (58) is connected between the first and second AC terminals (54, 56) of a "cold" redundant submodule (52₁) of the at least one "cold" redundant submodules, or
(b) if at least two of the plurality of submodules are "cold" redundant submodules (52₁, 52₂), the inserting switch (58) is connected between the first AC terminal (54) of a first "cold" redundant submodule (52₁) and the second AC terminal (56) of a second "cold" redundant submodule (52₂),
wherein the inserting switch (58) comprises a fast-acting circuit breaker (60) adapted to be opened in response to a detected fault in an active submodule (52₂, ..., 52ₙ; ..., 52ₙ) to provide rapid interruption of the converter arm current in the electrical path between the first and second AC terminals (54, 56), and cannot be closed, wherein the fast-acting circuit breaker (60) comprises:
(a) a fast-acting mechanical or electro-mechanical circuit breaker implemented using a spring-tightened opening switch, or
(b) a fuse (66) and a fast-acting mechanical or electro-mechanical switch (64; 68) connected in parallel with the fuse (66) and adapted to be opened in response to a detected fault in an active submodule (52₂, ..., 52ₙ), the fast-acting mechanical or electro-mechanical switch implemented using a spring-tightened opening switch or a pyrotechnic switch (68); and
wherein each submodule (52₁, 52₂, ..., 52ₙ) includes a DC voltage measurement device (72), the DC voltage measurement device (72) of the at least one "cold" redundant submodule (52₁; 52₁, 52₂) being adapted to compare a measured DC voltage across the energy storage device (C) of the at least one "cold" redundant submodule (52₁; 52₁, 52₂) against a minimum DC voltage threshold to determine if the at least one "cold" redundant submodule (52₁; 52₁, 52₂) can be transitioned to a switching operation after the fast-acting circuit breaker (60) has been opened in response to the detected fault in an active submodule to insert the at least one "cold" redundant submodule (52₁; 52₁, 52₂) into the converter arm (50A; 50B) and to force the interrupted converter arm current to flow through the at least one inserted "cold" redundant submodule (52₁; 52₁, 52₂) and start to charge the energy storage device (C) of the at least one inserted "cold" redundant submodule (52₁; 52₁, 52₂); and
wherein the inserting switch (58) further comprises an electrically-controlled contactor (62) connected in series with the fast-acting circuit breaker (60), the contactor (62) being a slower-acting mechanical or electro-mechanical switch and adapted to be opened and closed independently of the fast-acting circuit breaker (60), wherein the contactor (62) is further adapted to be:
(a) opened after the fast-acting circuit breaker (60) has been opened in response to a detected fault in an active submodule (52₂, ..., 52ₙ; ..., 52ₙ) to increase the voltage rating of the inserting switch (58), and
(b) opened and closed, while the fast-acting circuit breaker (60) remains closed, to allow the at least one "cold" redundant submodule (52₁; 52₁, 52₂) to be tested, and
(c) opened and closed, while the fast-acting circuit breaker (60) remains closed, to allow the at least one "cold" redundant submodule (52₁; 52₁, 52₂) to be temporarily inserted into the converter arm (50A; 50B) to increase output voltage or output power.

2. A converter arm (50A; 50B) according to claim 1, wherein each submodule (52₁, 52₂, ..., 52ₙ) includes an auxiliary power supply and wherein the fast-active circuit breaker (60,) receives activation power from the auxiliary power supply of one or both of:
a "cold" redundant submodule (52₁; 52₁, 52₂), and
one or more active submodules (52₂, ..., 52ₙ; ..., 52ₙ).

3. A converter arm (50A; 50B) according to claim 1 or claim 2, wherein the fast-acting circuit breaker (60) receives activation power from one or more of:
an external power source,
a fault detection device adapted to detect a fault in an active submodule (52₂, ..., 52ₙ; ..., 52ₙ), and
a controller.

4. A modular multilevel converter comprising one or more converter arms according to any preceding claim.

5. A method of operating a modular multilevel converter comprising a converter arm (50A; 50B) according to any of claims 1 to 3, in response to a fault in an active submodule (52₂, ..., 52ₙ; ...52ₙ), the method comprising:
inserting at least one "cold" redundant submodule (52₁; 52₁, 52₂) into the converter arm (50A; 50B) by opening the fast-acting circuit breaker (60) in response to an activation signal generated by a fault detection device to force the interrupted converter arm current to flow through the at least one inserted "cold" redundant submodule (52₁; 52₁, 52₂) and to start to charge the energy storage device (C) of the at least one inserted "cold" redundant submodule (52₁; 52₁, 52₂); and
transitioning the at least one inserted "cold" redundant submodule (52₁; 52₁, 52₂) to a switching operation when a DC voltage across the energy storage device (C) of the at least one inserted "cold" redundant submodule (52₁; 52₁, 52₂) measured by the DC voltage measurement device (72) of the at least one inserted "cold" redundant submodule (52₁; 52₁, 52₂) exceeds the minimum DC voltage threshold;
wherein the method further comprises opening the contactor (62) after the fast-acting circuit breaker (60) has been opened to increase the voltage rating of the inserting switch (58).

6. A method according to claim 5, further comprising controlling the converter arm (50A: 50B) to do one or more of:
reduce the generation of capacitive reactive power,
reduce the generation of active power,
increase the DC voltage of at least one active submodule (52₂, ..., 52ₙ; ...52ₙ), and
set all power demands for at least one active submodule (52₂, ..., 52ₙ; ...52ₙ) to zero.

7. A method of testing a modular multilevel converter comprising a converter arm (50A; 50B) according to any of claims 1 to 3, the method comprising:
opening the contactor (62) to insert at least one "cold" redundant submodule (52₁; 52₁, 52₂) into the converter arm (50A; 50B);
carrying out testing by measuring or calculating the value of one or more parameters of the at least one inserted "cold" redundant submodule (52₁; 52₁, 52₂) and using each measured or calculated value to determine if the at least one inserted "cold" redundant submodule (52₁; 52₁, 52₂) is operating normally; and
closing the contactor (62).

8. A method according to claim 7, wherein the functionality of the at least one inserted "cold" redundant submodule (52₁; 52₁, 52₂) is validated if a measured DC voltage across the energy storage device (C) of the at least one "cold" redundant submodule (52₁; 52₁, 52₂) reaches a DC voltage threshold within a predetermined time limit.

9. A method according to claim 7, wherein a measured DC voltage across the energy storage device (C) of the at least one inserted "cold" redundant submodule (52₁; 52₁, 52₂) is compared against an expected DC voltage that is estimated based on the measured converter arm current and the calculated charge level of the energy storage device (C) using a known capacitance value, and wherein the difference between the measured and expected DC voltages is used to detect a fault or malfunction in the at least one inserted "cold" redundant submodule (52₁; 52₁, 52₂).

10. A method according to claim 7, wherein the testing is carried out by switching the plurality of controllable semiconductor switches (S₁, S₂, ..., S₄) to put the at least one inserted "cold" redundant submodule (52₁; 52₁, 52₂) into different switching states.

11. A method according to claim 7, wherein the testing is carried out during a pre-charge sequence of the modular multilevel converter.

12. A method of operating a modular multilevel converter comprising a converter arm (50A; 50B) according to any of claims 1 to 3, the method comprising:
opening the contactor (62) to temporarily insert at least one "cold" redundant submodule (52₁; 52₁, 52₂) into the converter arm (50A; 50B);
operating the at least one inserted "cold" redundant submodule (52₁; 52₁, 52₂) according to a switching operation to increase output voltage or output power; and
closing the contactor (62);
wherein the step of operating the at least one inserted "cold" redundant submodule (52₁; 52₁, 52₂) according to a switching operation further comprises the step of transitioning the or each inserted "cold" redundant submodule to a zero switching state before closing the contactor (62).

13. A method according to claim 12, wherein the step of operating the at least one inserted "cold" redundant submodule (52₁; 52₁, 52₂) is carried out during an overvoltage operation of the modular multilevel converter to temporarily increase the output voltage.

## Patentansprüche

1. Wandlerarm (50A; 50B) für einen modularen Mehrebenenwandler, der Wandlerarm (50A; 50B) umfassend:
eine Vielzahl von in Reihe verbundenen Submodulen (52₁, 52₂, ..., 52ₙ), jedes Submodul umfassend:
eine Vielzahl von Halbleitervorrichtungen, wobei jede Halbleitervorrichtung mindestens einen steuerbaren Halbleiterschalter (S₁, S₂, ..., S₄) einschließt;
eine Energiespeichervorrichtung (C); und
erste und zweite Wechselstromendgeräte (54, 56);
wobei mindestens eines der Vielzahl von Submodulen ein aktives Submodul (52₂, ..., 52ₙ; ..., 52₁) ist;
wobei mindestens eines der Vielzahl von Submodulen ein "kaltes" redundantes Submodul (52₁; 52₁, 52₂) ist, das normalerweise überbrückt wird und geeignet ist, als Reaktion auf einen Fehler in einem aktiven Submodul (52₂, ..., 52ₙ; ..., 52₁) in den Wandlerarm (50A; 50B) eingesetzt zu werden;
wobei der Wandlerarm (50A; 50B) ferner einen Einsatzschalter (58) umfasst, wobei:
(a) der Einsatzschalter (58) zwischen dem ersten und dem zweiten AC-Endgerät (54, 56) eines "kalten" redundanten Submoduls (52₁) des mindestens einen "kalten" redundanten Submoduls verbunden ist, oder
(b) wenn mindestens zwei der Vielzahl von Submodulen "kalte" redundante Submodule (52₁, 52₂) sind, ist der Einsatzschalter (58) zwischen dem ersten AC-Endgerät (54) eines ersten "kalten" redundanten Submoduls (52₁) und dem zweiten AC-Endgerät (56) eines zweiten "kalten" redundanten Submoduls (52₂) verbunden,
wobei der Einsatzschalter (58) einen schnell wirkenden Schaltungsunterbrecher (60) umfasst, der geeignet ist, als Reaktion auf einen erfassten Fehler in einem aktiven Submodul (52₂, ...,52ₙ; ..., 52ₙ) geöffnet zu werden, um eine schnelle Unterbrechung des Umrichterarmstroms im elektrischen Pfad zwischen dem ersten und dem zweiten AC-Endgerät (54, 56) bereitzustellen, und nicht geschlossen werden kann, wobei der schnell wirkende Schaltungsunterbrecher (60) Folgendes umfasst:
(a) einen schnell wirkenden mechanischen oder elektromechanischen Unterbrecher, der durch einen federbelasteten Öffnungsschalter implementiert ist, oder
(b) eine Sicherung (66) und einen schnellen mechanischen oder elektromechanischen Schalter (64; 68), die mit der Sicherung (66) parallel verbunden sind und geeignet sind, als Reaktion auf einen erfassten Fehler in einem aktiven Submodul (52₂, ..., 52₁) geöffnet zu werden, wobei der schnelle mechanische oder elektromechanische Schalter durch einen federgespannten Öffnungsschalter oder einen pyrotechnischen Schalter (68) implementiert ist; und
wobei jedes Submodul (52₁, 52₂, ..., 52ₙ) eine Gleichspannungsmessvorrichtung (72) einschließt, wobei die Gleichspannungsmessvorrichtung (72) des mindestens einen "kalten" redundanten Submoduls (52₁; 52₁, 52₂) geeignet ist, eine gemessene Gleichspannung an der Energiespeichervorrichtung (C) des mindestens einen "kalten" redundanten Submoduls (52₁; 52₁, 52₂) mit einem minimalen Gleichspannungsschwellenwert zu vergleichen, um zu bestimmen, ob das mindestens eine "kalte" redundante Submodul (52₁; 52₁, 52₂) in einen Schaltvorgang überführt werden kann, nachdem der schnell wirkende Unterbrecher (60) als Reaktion auf den erfassten Fehler in einem aktiven Submodul geöffnet wurde, um das mindestens eine "kalte" redundante Submodul (52₁; 52₁, 52₂) in den Wandlerarm (50A; 50B) einzufügen und den unterbrochenen Strom des Wandlerarms zu zwingen, durch das mindestens eine eingesetzte "kalte" redundante Submodul (52₁; 52₁, 52₂) zu fließen und mit dem Laden der Energiespeichervorrichtung (C) des mindestens einen eingesetzten "kalten" redundanten Submoduls (52₁; 52₁, 52₂) zu beginnen; und
wobei der Einsatzschalter (58) ferner ein elektrisch gesteuertes Schütz (62) umfasst, das mit dem schnell wirkenden Unterbrecher (60) in Reihe verbunden ist, wobei das Schütz (62) ein langsamer wirkender mechanischer oder elektromechanischer Schalter ist und geeignet ist, unabhängig von dem schnell wirkenden Unterbrecher (60) geöffnet und geschlossen zu werden, wobei das Schütz (62) ferner geeignet ist, um:
(a) nach dem Öffnen des schnell wirkenden Unterbrechers (60) als Reaktion auf einen erfassten Fehler in einem aktiven Submodul (52₂, ..., 52ₙ; ..., 52₁) geöffnet zu werden, um die Nennspannung des Einsatzschalters (58) zu erhöhen, und
(b) geöffnet und geschlossen zu werden, während der schnell wirkende Unterbrecher (60) geschlossen bleibt, um die Prüfung des mindestens einen "kalten" redundanten Submoduls (52₁; 52₁, 52₂) zu ermöglichen, und
(c) geöffnet und geschlossen zu werden, während der schnell wirkende Unterbrecher (60) geschlossen bleibt, damit das mindestens eine "kalte" redundante Submodul (52₁; 52₁, 52₂) vorübergehend in den Wandlerarm (50A; 50B) eingesetzt werden kann, um die Ausgangsspannung oder -energie zu erhöhen.

2. Wandlerarm (50A; 50B) nach Anspruch 1, wobei jedes Submodul (52₁, 52₂, ..., 52₁) eine Hilfsenergieversorgung einschließt und wobei der schnell wirksame Unterbrecher (60) Aktivierungsenergie von der Hilfsenergieversorgung von einem oder beiden der Folgenden empfängt:
einem "kalten" redundanten Submodul (52₁; 52₁, 52₂), und
einem oder mehreren aktiven Submodulen (52₂, ..., 52ₙ; ..., 52ₙ).

3. Wandlerarm (50A; 50B) nach Anspruch 1 oder 2, wobei der schnell wirkende Unterbrecher (60) Aktivierungsenergie von einem oder mehreren der Folgenden empfängt:
einer externen Energiequelle,
eine Fehlererfassungsvorrichtung, die geeignet ist, einen Fehler in einem aktiven Submodul (52₂, ..., 52ₙ; ..., 52₁) zu erfassen, und
eine Steuerung.

4. Modularer Mehrebenenwandler, der einen oder mehrere Wandlerarme nach einem der vorstehenden Ansprüche umfasst.

5. Verfahren zum Betreiben eines modularen Mehrebenenwandlers, der einen Wandlerarm (50A; 50B) nach einem der Ansprüche 1 bis 3 umfasst, als Reaktion auf einen Fehler in einem aktiven Submodul (52₂, ..., 52ₙ; ... 52ₙ), das Verfahren umfassend:
Einsetzen mindestens eines "kalten" redundanten Submoduls (52₁; 52₁, 52₂) in den Wandlerarm (50A; 50B) durch Öffnen des schnell wirkenden Unterbrechers (60) als Reaktion auf ein von einer Erfassungsvorrichtung für Fehler erzeugtes Aktivierungssignal, um den unterbrochenen Strom des Wandlerarms zu zwingen, durch das mindestens eine eingesetzte "kalte" redundante Submodul (52₁; 52₁, 52₂) zu fließen und mit dem Laden der Energiespeichervorrichtung (C) des mindestens einen eingesetzten "kalten" redundanten Submoduls (52₁; 52₁, 52₂) zu beginnen; und
Überführen des mindestens einen eingefügten "kalten" redundanten Submoduls (52₁; 52₁, 52₂) in einen Schaltvorgang, wenn eine Gleichspannung an der Energiespeichervorrichtung (C) des mindestens einen eingefügten "kalten" redundanten Submoduls (52₁; 52₁, 52₂), die von der Gleichspannungsmessvorrichtung (72) des mindestens einen eingefügten "kalten" redundanten Submoduls (52₁; 52₁, 52₂) gemessen wird, die Mindestgleichspannungsschwelle überschreitet;
wobei das Verfahren ferner das Öffnen des Schützes (62) umfasst, nachdem der schnell wirkende Unterbrecher (60) geöffnet wurde, um die Nennspannung des Einsatzschalters (58) zu erhöhen.

6. Verfahren nach Anspruch 5, ferner umfassend das Steuern des Wandlerarms (50A: 50B), um eines oder mehrere der Folgenden durchzuführen:
Reduzieren der Erzeugung von kapazitiver Blindenergie,
Reduzieren der Erzeugung von Wirkenergie,
Erhöhen der Gleichspannung von mindestens einem aktiven Submodul (52₂, ..., 52ₙ; ... 52ₙ), und
Einstellen aller Energieanforderungen für mindestens ein aktives Submodul (52₂, ..., 52ₙ; ... 52₁) auf Null.

7. Verfahren zum Testen eines modularen Mehrebenenwandlers, umfassend einen Wandlerarm (50A; 50B) nach einem der Ansprüche 1 bis 3, das Verfahren umfassend:
Öffnen des Schützes (62) zum Einsetzen von mindestens einem "kalten" redundanten Submodul (52₁; 52₁, 52₂) in den Wandlerarm (50A; 50B);
Durchführen von Tests durch Messen oder Berechnen des Wertes eines oder mehrerer Parameter des mindestens einen eingesetzten "kalten" redundanten Submoduls (52₁; 52₁, 52₂) und Verwenden jedes gemessenen oder berechneten Wertes, um zu bestimmen, ob das mindestens eine eingesetzte "kalte" redundante Submodul (52₁; 52₁, 52₂) normal arbeitet; und
Schließen des Schützes (62).

8. Verfahren nach Anspruch 7, wobei die Funktionalität des mindestens einen eingesetzten "kalten" redundanten Submoduls (52₁; 52₁, 52₂) validiert wird, wenn eine gemessene Gleichspannung über der Energiespeichervorrichtung (C) des mindestens einen "kalten" redundanten Submoduls (52₁; 52₁, 52₂) einen Gleichspannungsschwellenwert innerhalb einer vorbestimmten Zeitgrenze erreicht.

9. Verfahren nach Anspruch 7, wobei eine gemessene Gleichspannung an der Energiespeichervorrichtung (C) des mindestens einen eingesetzten "kalten" redundanten Submoduls (52₁; 52₁, 52₂) mit einer erwarteten Gleichspannung verglichen wird, die basierend auf dem gemessenen Wandlerarmstrom und der berechneten Ladestufe der Energiespeichervorrichtung (C) unter Verwendung eines bekannten Kapazitätswerts geschätzt wird, und wobei die Differenz zwischen der gemessenen und der erwarteten Gleichspannung verwendet wird, um einen Fehler oder eine Fehlfunktion in dem mindestens einen eingesetzten "kalten" redundanten Submodul (52₁; 52₁, 52₂) zu erfassen.

10. Verfahren nach Anspruch 7, wobei das Testen durch Schalten der Vielzahl von steuerbaren Halbleiterschaltern (S₁, S₂, ..., S₄) durchgeführt wird, um das mindestens eine eingesetzte "kalte" redundante Submodul (52₁; 52₁, 52₂) in verschiedene Schaltzustände zu versetzen.

11. Verfahren nach Anspruch 7, wobei das Testen während einer Vorladesequenz des modularen Mehrebenenwandlers durchgeführt wird.

12. Verfahren zum Betreiben eines modularen Mehrebenenwandlers, der einen Wandlerarm (50A; 50B) nach einem der Ansprüche 1 bis 3 umfasst, das Verfahren umfassend:
Öffnen des Schützes (62) zum temporären Einsetzen von mindestens einem "kalten" redundanten Submodul (52₁; 52₁, 52₂) in den Wandlerarm (50A; 50B);
Betreiben des mindestens einen eingesetzten "kalten" redundanten Submoduls (52₁; 52₁, 52₂) nach einem Schaltvorgang zur Erhöhung der Ausgangsspannung oder der Ausgangsenergie; und
Schließen des Schützes (62);
wobei der Schritt des Betreibens des mindestens einen eingesetzten "kalten" redundanten Submoduls (52₁; 52₁, 52₂) nach einem Schaltvorgang ferner den Schritt des Übergangs des oder jedes eingesetzten "kalten" redundanten Submoduls in einen Nullschaltzustand vor dem Schließen des Schützes (62) umfasst.

13. Verfahren nach Anspruch 12, wobei der Schritt des Betreibens des mindestens einen eingesetzten "kalten" redundanten Submoduls (52₁; 52₁, 52₂) während eines Überspannungsbetriebs des modularen Mehrebenenwandlers durchgeführt wird, um die Ausgangsspannung vorübergehend zu erhöhen.

## Revendications

1. Bras (50A ; 50B) de convertisseur pour un convertisseur modulaire multiniveau, le bras (50A ; 50B) de convertisseur comprenant :
une pluralité de sous-modules connectés en série (52₁, 52₂, ..., 52ₙ), chaque sous-module comprenant :
une pluralité de dispositifs semi-conducteurs, chaque dispositif semi-conducteur comportant au moins un commutateur semi-conducteur (S₁, S₂, ..., S₄) pouvant être commandé ;
un dispositif (C) de stockage d'énergie ; et
des première et seconde bornes (54, 56) de courant alternatif CA ;
dans lequel au moins l'un de la pluralité de sous-modules est un sous-module actif (52₂, ...,52ₙ ; ...,52ₙ) ;
dans lequel au moins l'un de la pluralité de sous-modules est un sous-module redondant « froid » (52₁ ; 52₁, 52₂) qui est normalement contourné et adapté pour être inséré dans le bras (50A ; 50B) de convertisseur en réponse à un défaut dans un sous-module actif (52₂, ..., 52ₙ ; ..., 52ₙ) ;
dans lequel le bras (50A ; 50B) de convertisseur comprend en outre un commutateur d'insertion (58), dans lequel :
(a) le commutateur d'insertion (58) est connecté entre les première et seconde bornes (54, 56) CA d'un sous-module redondant « froid » (52₁) dudit au moins un sous-module redondant « froid », ou
(b) si au moins deux de la pluralité de sous-modules sont des sous-modules redondants « froids » (52₁, 52₂), le commutateur d'insertion (58) est connecté entre la première borne (54) CA d'un premier sous-module redondant « froid » (52₁) et la seconde borne (56) CA d'un second sous-module redondant « froid » (52₂),
dans lequel le commutateur d'insertion (58) comprend un disjoncteur à action rapide (60) adapté pour être ouvert en réponse à un défaut détecté dans un sous-module actif (52₂, ..., 52ₙ ; ..., 52ₙ) pour fournir une interruption rapide du courant de bras de convertisseur dans le chemin électrique entre les première et seconde bornes (54, 56) CA, et ne peut pas être fermé, dans lequel le disjoncteur à action rapide (60) comprend :
(a) un disjoncteur mécanique ou électromécanique à action rapide mis en oeuvre à l'aide d'un commutateur d'ouverture contracté par ressort, ou
(b) un fusible (66) et un commutateur mécanique ou électromécanique à action rapide (64 ; 68) connecté en parallèle avec le fusible (66) et adapté pour être ouvert en réponse à un défaut détecté dans un sous-module actif (52₂, ..., 52ₙ), le commutateur mécanique ou électromécanique à action rapide étant mis en oeuvre à l'aide d'un commutateur d'ouverture contracté par ressort ou d'un commutateur pyrotechnique (68) ; et
dans lequel chaque sous-module (52₁, 52₂, ..., 52ₙ) comporte un dispositif de mesure (72) de tension CC, le dispositif de mesure (72) de tension CC dudit au moins un sous-module redondant « froid » (52₁ ; 52₁, 52₂) étant adapté pour comparer une tension CC mesurée à travers le dispositif (C) de stockage d'énergie dudit au moins un sous-module redondant « froid » (52₁ ; 52₁, 52₂) vis-à-vis d'un seuil de tension CC minimum pour déterminer si ledit au moins un sous-module redondant « froid » (52₁ ; 52₁, 52₂) peut passer à une opération de commutation après que le disjoncteur à action rapide (60) a été ouvert en réponse au défaut détecté dans un sous-module actif pour insérer ledit au moins un sous-module redondant « froid » (52₁ ; 52₁, 52₂) dans le bras (50A ; 50B) de convertisseur et forcer le courant de bras de convertisseur interrompu à circuler à travers ledit au moins un sous-module redondant « froid » inséré (52, ; 52₁, 52₂) et commencer à charger le dispositif (C) de stockage d'énergie dudit au moins un sous-module redondant « froid » inséré (52, ; 52₁, 52₂) ; et
dans lequel le commutateur d'insertion (58) comprend en outre un contacteur (62) à commande électrique connecté en série avec le disjoncteur à action rapide (60), le contacteur (62) étant un commutateur mécanique ou électromécanique à action plus lente et adapté pour être ouvert et fermé indépendamment du disjoncteur à action rapide (60), dans lequel le contacteur (62) est en outre adapté pour être :
(a) ouvert après que le disjoncteur à action rapide (60) a été ouvert en réponse à un défaut détecté dans un sous-module actif (52₂, ..., 52ₙ ; ..., 52ₙ) pour augmenter la tension nominale du commutateur d'insertion (58), et
(b) ouvert et fermé, tandis que le disjoncteur à action rapide (60) reste fermé, pour permettre de tester ledit au moins un sous-module redondant « froid » (52₁ ; 52₁, 52₂), et
(c) ouvert et fermé, tandis que le disjoncteur à action rapide (60) reste fermé pour permettre l'insertion temporaire dudit au moins un sous-module redondant « froid » (52₁ ; 52₁, 52₂) dans le bras (50A ; 50B) de convertisseur pour augmenter une tension de sortie ou une puissance de sortie.

2. Bras (50A ; 50B) de convertisseur selon la revendication 1, dans lequel chaque sous-module (52₁, 52₂, ..., 52ₙ) comporte une alimentation auxiliaire et dans lequel le disjoncteur à action rapide (60,) reçoit une puissance d'activation de l'alimentation auxiliaire de l'un ou des deux parmi :
un sous-module redondant « froid » (52₁ ; 52₁, 52₂), et
un ou plusieurs sous-modules actifs (52₂, ..., 52ₙ ; ..., 52ₙ).

3. Bras (50A ; 50B) de convertisseur selon la revendication 1 ou la revendication 2, dans lequel le disjoncteur à action rapide (60) reçoit une puissance d'activation de l'un ou plusieurs parmi :
une source d'alimentation externe,
un dispositif de détection de défaut adapté pour détecter un défaut dans un sous-module actif (52₂, ..., 52ₙ ; ..., 52ₙ), et
un dispositif de commande.

4. Convertisseur modulaire multiniveau comprenant un ou plusieurs bras de convertisseur selon l'une quelconque des revendications précédentes.

5. Procédé de fonctionnement d'un convertisseur modulaire multiniveau comprenant un bras (50A ; 50B) de convertisseur selon l'une quelconque des revendications 1 à 3, en réponse à un défaut dans un sous-module actif (52₂, ..., 52ₙ ; ... 52ₙ), le procédé comprenant :
l'insertion d'au moins un sous-module redondant « froid » (52₁ ; 52₁, 52₂) dans le bras (50A ; 50B) de convertisseur en ouvrant le disjoncteur à action rapide (60) en réponse à un signal d'activation généré par un dispositif de détection de défaut pour forcer le courant interrompu de bras de convertisseur à circuler à travers ledit au moins un sous-module redondant « froid » inséré (52, ; 52₁, 52₂) et commencer à charger le dispositif (C) de stockage d'énergie dudit au moins un sous-module redondant « froid » inséré (52₁ ; 52₁, 52₂) ; et
la transition dudit au moins un sous-module redondant « froid » inséré (52₁ ; 52₁, 52₂) vers une opération de commutation lorsqu'une tension CC à travers le dispositif (C) de stockage d'énergie dudit au moins un sous-module redondant « froid » inséré (52, ; 52₁, 52₂) mesurée par le dispositif de mesure (72) de tension CC dudit au moins un sous-module redondant « froid » inséré (52, ; 52₁, 52₂) dépasse le seuil de tension CC minimum ;
dans lequel le procédé comprend en outre l'ouverture du contacteur (62) après que le disjoncteur à action rapide (60) a été ouvert pour augmenter la tension nominale du commutateur d'insertion (58).

6. Procédé selon la revendication 5, comprenant en outre la commande du bras (50A : 50B) de convertisseur pour effectuer une ou plusieurs actions consistant à :
réduire la génération de puissance réactive capacitive,
réduire la génération de puissance active,
augmenter la tension CC d'au moins un sous-module actif (52₂, ..., 52ₙ ; ... 52ₙ), et
établir toutes les demandes de puissance pour au moins un sous-module actif (52₂, ..., 52ₙ ; ... 52ₙ) à zéro.

7. Procédé de test d'un convertisseur modulaire multiniveau comprenant un bras (50A ; 50B) de convertisseur selon l'une quelconque des revendications 1 à 3, le procédé comprenant :
l'ouverture du contacteur (62) pour insérer au moins un sous-module redondant « froid » (52₁ ; 52₁, 52₂) dans le bras (50A ; 50B) de convertisseur ;
la réalisation de test en mesurant ou en calculant la valeur d'un ou plusieurs paramètres dudit au moins un sous-module redondant « froid » inséré (52, ; 52₁, 52₂) et en utilisant chaque valeur mesurée ou calculée pour déterminer si ledit au moins un sous-module redondant « froid » inséré (52, ; 52₁, 52₂) fonctionne normalement ; et
la fermeture du contacteur (62).

8. Procédé selon la revendication 7, dans lequel la fonctionnalité dudit au moins un sous-module redondant « froid » inséré (52, ; 52₁, 52₂) est validée si une tension CC mesurée à travers le dispositif (C) de stockage d'énergie dudit au moins un sous-module redondant « froid » (52₁ ; 52₁, 52₂) atteint un seuil de tension CC dans une limite de temps prédéterminée.

9. Procédé selon la revendication 7, dans lequel une tension CC mesurée à travers le dispositif (C) de stockage d'énergie dudit au moins un sous-module redondant « froid » inséré (52, ; 52₁, 52₂) est comparée à une tension CC attendue qui est estimée sur la base du courant mesuré de bras de convertisseur et du niveau de charge calculé du dispositif (C) de stockage d'énergie en utilisant une valeur de capacité connue, et dans lequel la différence entre les tensions CC mesurée et attendue est utilisée pour détecter un défaut ou un dysfonctionnement dans ledit au moins un sous-module redondant « froid » inséré (52, ; 52₁, 52₂).

10. Procédé selon la revendication 7, dans lequel le test est réalisé en commutant la pluralité de commutateurs semi-conducteurs (S₁, S₂, ..., S₄) pouvant être commandés pour mettre ledit au moins un sous-module redondant « froid » inséré (52, ; 52₁, 52₂) dans différents états de commutation.

11. Procédé selon la revendication 7, dans lequel le test est réalisé pendant une séquence de pré-charge du convertisseur modulaire multiniveau.

12. Procédé de fonctionnement d'un convertisseur modulaire multiniveau comprenant un bras (50A ; 50B) de convertisseur selon l'une quelconque des revendications 1 à 3, le procédé comprenant :
l'ouverture du contacteur (62) pour insérer temporairement au moins un sous-module redondant « froid » (52₁ ; 52₁, 52₂) dans le bras (50A ; 50B) de convertisseur ;
le fonctionnement dudit au moins un sous-module redondant « froid » inséré (52, ; 52₁, 52₂) selon une opération de commutation pour augmenter une tension de sortie ou une puissance de sortie ; et
la fermeture du contacteur (62) ;
dans lequel l'étape de fonctionnement dudit au moins un sous-module redondant « froid » inséré (52, ; 52₁, 52₂) selon une opération de commutation comprend en outre l'étape de transition du ou de chaque sous-module redondant « froid » inséré vers un état de commutation zéro avant fermeture du contacteur (62).

13. Procédé selon la revendication 12, dans lequel l'étape de fonctionnement dudit au moins un sous-module redondant « froid » inséré (52, ; 52₁, 52₂) est réalisée pendant un fonctionnement en surtension du convertisseur modulaire multiniveau pour augmenter temporairement la tension de sortie.
